# EUROPEAN PATENT APPLICATION

(11) **EP 4 712 584 A1**
(43) Date of publication of application: **18.03.2026**
(21) Application number: 24803328.4
(22) Date of filing: 11.04.2024
(51) Int. Cl.: H04W 52/02, H04W 72/231, H04W 72/0446

(54) **WIRELESS TERMINAL, WIRELESS ACCESS NETWORK NODE, AND METHODS THEREOF**

(30) Priority: 11.05.2023 JP 2023078938
(71) Applicant: NEC Corporation, 108-8001 Tokyo (JP)
(72) Inventor: HAYASHI Satoaki, Tokyo 108-8001 (JP); CHEN Yuhua, Tokyo 108-8001 (JP)
(74) Representative: Mathys & Squire
(86) International application number: PCT/JP2024/014605
(87) International publication number: WO 2024/232213

(57) **Abstract**

A radio terminal receives, via one or more RRC messages, a first configuration related to downlink (DL) reception or uplink (UL) transmission, a second configuration related to the DL reception or the UL transmission, provided in addition to the first configuration, and a third configuration related to cell DTX or cell DRX (cell DTX/DRX). The radio terminal uses the first configuration for the DL reception or UL transmission while the cell DTX/DRX based on the third configuration is deactivated, and uses the second configuration for the DL reception or UL transmission while the cell DTX/DRX based on the third configuration is activated. For example, this helps facilitate switching the operation of the radio terminal between normal operation and operation more appropriately aligned with cell DTX/DRX, depending on the dynamic activation and deactivation of the cell DTX/DRX.

## Description

### Technical Field

The present disclosure relates to radio communication networks, and, more specifically, to various technologies that contribute to improving network energy saving, either directly or indirectly.

### Background Art

The 3rd Generation Partnership Project (3GPP (registered trademark)) Release 15 and subsequent releases specify 5G New Radio (NR) User Equipment (UE) power saving schemes. These UE power saving schemes include discontinuous reception (DRX) performed by a UE in Radio Resource Control (RRC)_CONNECTED mode (see, for example, Non-Patent Literature 1-3). In this description, DRX performed by a UE in RRC_CONNECTED mode is referred to as connected mode DRX (CDRX), to distinguish it from cell discontinuous transmission (DTX) and cell DRX, which are described below.

Clause 11 of Non-Patent Literature 1 states that the Physical Downlink Control Channel (PDCCH) monitoring activity of a UE in RRC_CONNECTED mode is governed by CDRX. If CDRX is configured, the UE does not need to continuously monitor a PDCCH. CDRX is characterized by its on-duration, inactivity timer, retransmission timer, cycle, and active time. The on-duration is the duration that the UE waits for, after waking up, to receive PDCCHs. If the UE successfully decodes a PDCCH, it stays awake and starts the inactivity timer. The inactivity timer is the duration that the UE waits to successfully decode a next PDCCH from the last successful decoding of a PDCCH. If PDCCH decoding fails until the inactive timer expires, the UE can return to sleep. The retransmission timer is the duration during which the UE must be awake to receive retransmissions. The DRX cycle specifies a periodic repetition of the on-duration, followed by a period of possible inactivity. The active time is the total duration during which the UE monitors a PDCCH. The active time includes the on-duration within a DRX cycle, the time during which the UE performs continuous reception while the inactivity timer has not expired, and the time during which the UE performs continuous reception while waiting for a retransmission opportunity.

Clause 5.7 of Non-Patent Literature 2 describes the CDRX-related timers and the details of their start and stop conditions. CDRX is controlled by RRC. The CDRX-related parameters provided to the UE from the network by the RRC configuration (DRX-Config) include the following: drx-onDurationTimer, drx-SlotOffset, drx-InactivityTimer, drx-RetransmissionTimerDL (per DL HARQ process except for the broadcast process), drx-RetransmissionTimerUL (per UL HARQ process),drx-LongCycleStartOffset, drx-ShortCycle (optional), drx-ShortCycleTimer (optional), drx-HARQ-RTT-TimerDL (per DL HARQ process except for the broadcast process), and drx-HARQ-RTT-TimerUL (per UL HARQ process). Multiple serving cells of a Medium Access Control (MAC) entity of the UE may be configured by the RRC with two CDRX groups having different CDRX parameters. Although the term "DRX group" is used in the 3GPP specification, this description uses the term "CDRX group" for clarity. If two CDRX groups are configured, each serving cell is uniquely assigned to one of the two groups. The CDRX parameters that are configured individually for each CDRX group are drx-onDurationTimer and drx-InactivityTimer. On the other hand, the CDRX parameters common to the multiple CDRX groups are drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

If CDRX is configured, the active time for multiple serving cells in a CDRX group includes, among other time periods, the time while:
- the drx-onDurationTimer or drx-InactivityTimer configured for the CDRX group is running; or
- the drx-RetransmissionTimerDL or drx-RetransmissionTimerUL is running on any of the serving cells in the CDRX group; or
- a scheduling request is sent on a Physical Uplink Control Channel (PUCCH) and is pending; or
- a PDCCH indicating a new transmission to the Cell Radio Network Temporary Identifier (C-RNTI) of the MAC entity has not been received after successful reception of a random access response to a random access preamble not selected by the MAC entity.

Non-Patent Literature 3 specifies that an RRC configuration related to CDRX (i.e., DRX-Config) is provided to the UE by the network via a UE-dedicated RRC message, specifically an RRCReconfiguration message. The DRX-Config is contained in a MAC-CellGroupConfig within a CellGroupConfig carried by an RRCReconfiguration message.

The 3GPP is currently discussing network energy saving for 3GPP Release 18 (see, for example, Non-Patent Literature 4-14). Network energy saving is abbreviated as NES. As described in Non-Patent Literature 4 and 5, there are various technologies for improving network energy saving, including cell DTX and DRX. For example, the network may provide a mechanism for notifying UEs in a cell whether the cell is in an inactive state. During cell DTX or cell DRX, i.e., while the cell is in an inactive state, the cell may not transmit or receive, or it may only perform restricted transmission or reception. For instance, the cell does not need to transmit or receive some periodic signals and channels, such as cell common channels and signals and UE-specific signals and channels.

The term "cell DTX/DRX" may be used to refer to either or both of cell DTX and cell DRX. Also, although the definitions of terms for cell DTX/DRX are not clear at present, in this description, the terms "cell DTX ON duration," "cell DTX off duration," "cell DRX ON duration," and "cell DRX off duration" are used with respect to cell DTX/DRX. The cell DTX/DRX ON duration refers to the duration, time, or period during which a cell is active and can transmit and receive all necessary cell common channels and signals, as well as UE-specific signals and channels. In contrast, the cell DTX/DRX off duration refers to the duration, time, or period during which the cell is in an inactive state for NES and does not transmit or receive, or is allowed to maintain only restricted transmission or reception. The cell DTX/DRX ON duration may also be referred to as the cell DTX/DRX ON time or period, or the cell DTX/DRX active time, period, or duration. The cell DTX/DRX off duration may also be referred to as the cell DTX/DRX off time or off period, or the cell DTX/DRX inactive (or non-active) time, period, or duration.

Clause 6.1.4 of Non-Patent Literature 5 describes examples of signals that a gNB stops transmitting or receiving during cell DTX/DRX operation in a non-active period. In the first example, during the cell DTX/DRX off duration, the cell or gNB is expected to turn off all transmission or reception of data traffic and reference signals. In the second example, during the cell DTX/DRX off duration, the cell or gNB is expected to turn off only the transmission or reception of data traffic. That is, the gNB continues to transmit or receive reference signals. In the third example, during the cell DTX/DRX off duration, the cell or gNB is expected to turn off dynamic data transmission or reception. That is, the gNB is expected to continue transmitting or receiving on periodic resources such as Semi-Persistent Scheduling (SPS), Configured Grant (CG) Physical Uplink Shared Channel (PUSCH), Scheduling Request (SR), Random Access Channel (RACH), and Sounding Reference Signal (SRS). In the fourth example, during the cell DTX off duration, the cell or gNB is expected to transmit only reference signals (e.g., Channel State Information Reference Signal (CSI-RS) for measurement). Cell DTX and cell DRX can be configured and operated separately (e.g., one RRC configuration set for downlink and another RRC configuration set for uplink). Cell DTX and cell DRX can also be configured and operated together. For each cell DTX/DRX configuration, parameters including at least periodicity, start slot/offset, and ON duration can be configured.

Additionally, clause 6.1.4 of Non-Patent Literature 5 states that the cell DTX/DRX mode can be activated and deactivated via dynamic Layer 1 or Layer 2 (L1/L2) signaling and UE-specific RRC signaling. Both UE-specific L1/L2 signaling and common L1/L2 signaling can be considered for the activation and deactivation of the cell DTX/DRX mode. Furthermore, clause 6.1.4 of Non-Patent Literature 5 states that aligning UE CDRX with cell DTX and aligning DRX among multiple UEs is beneficial.

Non-Patent Literature 6 proposes defining that a cell DTX off duration (or inactive period) opportunity occurs only in cases where all connected UEs in the cell are in CDRX inactive time, i.e., not decoding a PDCCH. Non-Patent Literature 6 states that there is a certain interest in the gNB aligning the CDRX cycles of UEs in order to maximize cell DTX opportunities. This alignment does not imply that multiple UEs have drx-onDurationTimer, drx-InactivityTimer, or drx-RetransmissionTimerDL/UL configured to the same value, but rather that these parameters are adjusted in some way so that there is some possible overlap in the inactive time of the UEs.

Non-Patent Literature 7 discusses whether L1/L2 signaling for cell DTX/DRX activation is UE-specific or group-common. Non-Patent Literature 7 proposes that both UE-specific and group-common L1/L2 signaling may be considered to activate a cell DTX/DRX pattern. Non-Patent Literature 7 also discusses whether RRC is permitted to configure multiple sets of cell DTX/DRX configurations or modes. Non-Patent Literature 7 states that in one option, multiple configurations of cell DTX/DRX can be configured by RRC, and an applicable configuration set can be activated using L1/L2 signaling.

Section 2.2 of Non-Patent Literature 8 describes the alignment of cell DTX and UE CDRX. Non-Patent Literature 8 indicates that aligning the cell DTX ON duration and the UE CDRX ON duration, specifically, setting the UE CDRX ON duration of all UEs in a cell to fall within the cell DTX ON duration of the cell, can ensure data scheduling with lower latency and provide a longer cell DTX OFF duration. In order to achieve alignment between cell DTX/DRX and UE CDRX, Non-Patent Literature 5 proposes indicating the UE CDRX start offset in L1 signaling, thereby adapting to dynamic indication of the cell DTX/DRX pattern.

Non-Patent Literature 9 states that one of the items agreed at the #121 meeting of the 3GPP Technical Specification Group (TSG) Radio Access Network (RAN) Working Group #2 (WG2) (RAN2) is that the pattern configuration for cell DRX/DTX is common for Release 18 UEs in the cell.

Section 2.1 of Non-Patent Literature 10 states that many companies reaffirmed the previous agreement in RAN2 that cell DTX/DRX parameters or configurations are performed by dedicated RRC signaling, and agreed that a periodic cell DTX/DRX pattern is configured by UE-specific RRC signaling.

Section 2.2 of Non-Patent Literature 10 describes three options for activating and deactivating cell DTX/DRX. In Option 1, cell DTX/DRX is activated and deactivated via dynamic L1/L2 signaling. In Option 2, Cell DTX/DRX is activated and deactivated implicitly. That is, Cell DTX/DRX is immediately activated once it is configured by UE-specific RRC signaling, and it is deactivated once the RRC configuration is released. Option 3 uses both Option 1 and Option 2. Section 2.2 of Non-Patent Literature 1 states that many companies support Option 3. It also states that there is a common view that Option 2 (implicit activation via RRC) should be the baseline and must be supported, and that there is a common understanding that Option 1 (L1/L2) is required if there are multiple cell DTX/cell DRX configurations.

Section 2.3 of Non-Patent Literature 10 describes alignment between Cell DTX and UE CDRX. Specifically, many companies have agreed that an aligned UE CDRX configuration with Cell DTX means that the on-duration of CDRX falls within the cell DTX on-duration.

Section 2.2 of Non-Patent Literature 11 describes the activation and deactivation of cell DTX/DRX as following. UE-specific RRC signaling can be used (for cell DTX/DRX activation) in the case of initial configuration or new UEs entering the cell. This is simple and can be used implicitly. In other words, the cell DTX/DRX is activated immediately once it is configured by RRC, and it is deactivated once the RRC configuration is released. The downsides of dedicated RRC signaling include signaling overhead and slower activation than by lower layers. Therefore, group-common L1/Downlink Control Information (DCI)-based activation/deactivation is useful as it would provide a fast and efficient way to dynamically control cell DTX/DRX on a group basis with low overhead.

Section 2.3 of Non-Patent Literature 11 describes the alignment between cell DTX and UE CDRX as follows. When cell DTX is activated, the UE should adopt a UE CDRX aligned with the cell DTX. It should be assured that the active period of the cell DTX fully overlaps with the on-duration of the UE CDRX for UE power efficiency. The alignment of UE CDRX with a certain cell DTX does not result in an on/off pattern of UE CDRX being exactly the same as that of the cell DTX. The on/off pattern of an aligned UE CDRX may have a different on-duration, periodicity, or start offset than that of the cell DTX, but the UE CDRX on-duration may still fall within the cell DTX active time. The offset, periodicity, or on-duration of an aligned CDRX should be determined by the network implementation. The periodicity of UE CRX configurations in a cell should be the same as or a multiple of the serving cell's DTX periodicity, and the UE CDRX on-duration cannot exceed the cell DTX ON duration.

Additionally, section 2.3 of Non-Patent Literature 11 describes changing or updating UE CDRX configurations as following. When a cell DTX is activated, the UE should adopt an aligned CDRX that may differ from the current CDRX pattern. Furthermore, when a cell DTX is deactivated, the aligned CDRX may be released, and a new CDRX may be configured for UEs. The existing mechanism is to reconfigure CDRX of UEs by UE-specific RRC messages. It is not dynamic enough and may cause high signaling overhead when cell DTX is activated/deactivated. RAN2 should discuss how to efficiently change CDRX of UEs when cell DTX is activated/deactivated without increasing signaling overhead.

Section 2.2 of Non-Patent Literature 12 describes the alignment between UE CDRX and cell DTX as follows. UE CDRX can be aligned with cell DTX by UE itself. As one option, a UE should mask (i.e., perform an AND operation) the UE CDRX configuration with the cell DTX configuration. During the cell DTX ON duration, UE performs the legacy DRX procedure/behavior according to its CDRX configuration. During the cell DTX OFF period, UE is in DRX mode, i.e., it does not monitor PDCCH.

Sections 2.2.2 and 2.3 of Non-Patent Literature 13 describe the coexistence of Cell DTX and UE CDRX as follows. Functional coexistence between UE CDRX and Cell DTX can be ensured by the network through appropriate UE CDRX and Cell DTX configurations, and by specifying the UE behavior in cases where UE CDRX active periods occur during cell DTX non-active periods (Proposal 8). For example, it could be discussed to design a solution that would allow for achieving the trade-off between the network and UE energy savings and Quality of Service (QoS)/Quality of Experience (QoE) degradation, e.g., through shorter UE CDRX on-duration or longer CDRX cycles during the cell DTX non-active periods (Proposal 12).

Section 2.2 of Non-Patent Literature 14 describes the alignment of cell DTX and UE CDRX as follows. To maximize the energy saving gains, efforts should be made to make the alignment of UE and networks' on-duration time. To achieve this, one option is to reconfigure UE CDRX parameters, such as drx-LongCycleStartOffset, to align the cycle and start offset of UE CDRX with cell DTX/DRX. However, this takes longer time for the RRC reconfiguration parameters to take effect. In addition, once the traffic load increases, the gNB then has to reconfigure these parameters again to distribute the UE's active time. Another option is to use dynamic signaling. The alignment of UE CDRX can be done along with the L1 activation and deactivation of cell DTX/DRX. Specifically, when the gNB decides to start cell DTX/DRX, it sends a dynamic indication to inform UEs of the activation of cell DTX/DRX. In conjunction with this dynamic activation, all UEs will update their CDRX parameters, such as the CDRX cycle and start offset, to common values configured by the network. Alternatively, these common parameters may share the same values as the cell DTX/DRX. For example, all UEs may use the same offset and cycle for CDRX as for cell DTX/DRX, while the DRX on-duration timer can share the same value as cell DTX/DRX or have a different value from that of cell DTX/DRX.

### Citation List

### Non Patent Literature

[Non-Patent Literature 1] 3GPP TS 38.300 V17.4.0 (2023-03) "3rd Generation Partnership Project; Technical Specification Group Radio Access Network; NR; NR and NG-RAN Overall Description; Stage 2 (Release 17)", March 2023
[Non-Patent Literature 2] 3GPP TS 38.321 V17.4.0 (2023-03) "3rd Generation Partnership Project; Technical Specification Group Radio Access Network; NR; Medium Access Control (MAC) protocol specification (Release 17)", March 2023
[Non-Patent Literature 3] 3GPP TS 38.331 V17.4.0 (2023-03) "3rd Generation Partnership Project; Technical Specification Group Radio Access Network; NR; Radio Resource Control (RRC) protocol specification (Release 17)", March 2023
[Non-Patent Literature 4] Huawei, "New WID: Network energy savings for NR", RP-223540, 3GPP TSG RAN Meeting #98-e, December 12-16, 2022
[Non-Patent Literature 5] 3GPP TR 38.864 V18.1.0 (2023-03) "3rd Generation Partnership Project; Technical Specification Group Radio Access Network; Study on network energy savings for NR (Release 18)", March 2023
[Non-Patent Literature 6] Qualcomm Incorporated, "Cell DTX/DRX NES Techniques", R2-2300539, 3GPP TSG-RAN WG2 Meeting #121, Athens, Greece, February 27 - March 3, 2023
[Non-Patent Literature 7] InterDigital, "Report of [301][NES] Summary of DTX/DRX - 8.3.2", R2-2213071, 3GPP TSG-RAN WG2 Meeting #120, Toulouse, France, November 14-19, 2022
[Non-Patent Literature 8] ZTE, Sanechips, "Discussion on cell DTX /DRX", R1-2300373, 3GPP TSG-RAN WG1 Meeting #112, Athens, Greece, February 27 - March 3, 2023
[Non-Patent Literature 9] Session Chair (InterDigital), "Report from Session on NES, UAV, Small Data, Rel-15-17 UP, Rel-17 Small Data, IIoT/URLLC, and RACH partitioning", R2-2301903, 3GPP TSG-RAN WG2 Meeting #121, Athens, Greece, February 27 - March 3, 2023
[Non-Patent Literature 10] Huawei, HiSilicon, "Outcome of [POST121][312][NES] DTX/DRX - Configuration/ activation/ deactivation and alignment (Huawei)", R2-2302796, 3GPP TSG-RAN WG2 Meeting #121-bis-e, Online, April 17-26, 2023
[Non-Patent Literature 11] Huawei, HiSilicon, "Discussion on cell DTX and DRX", R2-2302797, 3GPP TSG-RAN WG2 Meeting #121-bis-e, Online, April 17-26, 2023
[Non-Patent Literature 12] Lenovo, "Alignment to Cell DRX and cell DTX", R2-2303653, 3GPP TSG-RAN WG2 Meeting #121-bis-e, Online, April 17-26, 2023
[Non-Patent Literature 13] Ericsson, "Further aspects on cell DTX/DRX", R2-2303663, 3GPP TSG-RAN WG2 Meeting #121-bis-e, Online, April 17-26, 2023
[Non-Patent Literature 14] CMCC, "Discussion on cell DTX/DRX", R2-2303792, 3GPP TSG-RAN WG2 Meeting #121-bis-e, Online, April 17-26, 2023

### Summary of Invention

### Technical Problem

The inventors have studied cell DTX/DRX and identified a number of problems. One of the problems identified by the inventors is to provide an improvement that facilitates switching UE CDRX patterns between a normal pattern and a pattern that is aligned (more appropriately) with the cell DTX pattern, in response to the dynamic activation and deactivation of cell DTX.

Non-Patent Literature 8 suggests using L1 signaling to indicate the UE CDRX start offset. However, in some implementations, changing only the UE CDRX start offset may not always be sufficient for achieving proper alignment between cell DTX and UE CDRX. Additionally, due to its data size constraints, L1 signaling may be insufficient to indicate CDRX-related parameters besides the UE CDRX start offset.

Non-Patent Literature 13 discloses that during the non-active period of cell DTX, the UE CDRX on-duration may be shortened or the CDRX cycle may be lengthened. However, Non-Patent Literature 13 does not disclose how this is achieved.

Non-Patent Literature 14 discloses that, in conjunction with the dynamic activation of cell DTX by L1 signaling, all UEs may update CDRX parameters, such as the CDRX cycle and start offset, to common values configured by the network. However, Non-Patent Literature 14 does not explicitly disclose how the common CDRX parameters are configured or provided to the UEs.

Additionally, Non-Patent Literature 14 discloses that common CDRX parameters (e.g., cycle and start offset) used by all UEs while cell DTX is activated may share the same values as the cell DTX/DRX. However, regardless of whether each UE's normal CDRX pattern is sufficiently aligned with the cell DTX pattern, having all UEs in the cell follow the same CDRX parameters, i.e., the same CDRX pattern, may be undesirable from the perspective of UE energy savings.

Non-Patent Literature 12 discloses that UE CDRX can be aligned with cell DTX by UE itself and, for example, a UE can mask (i.e., perform an AND operation) the UE CDRX configuration with the cell DTX configuration. However, with this method, when there is no or only slight overlap between the CDRX ON duration and the cell DTX ON duration, the UE may not be able to properly perform PDCCH monitoring.

Another one of the problems identified by the inventors is to provide an improvement that facilitates switching UE operations, other than UE CDRX, between normal one and one that is aligned (more appropriately) with the cell DTX/DRX, in response to the dynamic activation and deactivation of cell DTX/DRX.

One of the objects to be achieved by the example embodiments disclosed herein is to provide apparatuses, methods, and programs that contribute to solving at least one of a plurality of problems, including the problems described above. It should be noted that this object is only one of the objects to be achieved by the example embodiments disclosed herein. Other objects or problems and novel features will become apparent from the following description and the accompanying drawings.

### Solution to Problem

In a first aspect, a radio terminal is configured to receive, via one or more RRC messages, a first configuration related to downlink reception or uplink transmission, a second configuration related to the downlink reception or the uplink transmission, provided in addition to the first configuration, and a third configuration related to cell DTX or cell DRX. The radio terminal is configured to use the first configuration for the downlink reception or uplink transmission while the cell DTX or cell DRX based on the third configuration is deactivated. The radio terminal is configured to use the second configuration for the downlink reception or uplink transmission while the cell DTX or cell DRX based on the third configuration is activated.

In a second aspect, a method performed by a radio terminal includes the steps of:
(a) receiving, via one or more RRC messages, a first configuration related to downlink reception or uplink transmission, a second configuration related to the downlink reception or the uplink transmission, provided in addition to the first configuration, and a third configuration related to cell DTX or cell DRX; and
(b) using the first configuration for the downlink reception or uplink transmission while the cell DTX or cell DRX based on the third configuration is deactivated, and using the second configuration for the downlink reception or uplink transmission while the cell DTX or cell DRX based on the third configuration is activated.

In a third aspect, a radio access network node is configured to transmit to a radio terminal, via one or more RRC messages, a first configuration related to downlink reception or uplink transmission, a second configuration related to the downlink reception or the uplink transmission, provided in addition to the first configuration, and a third configuration related to cell DTX or cell DRX. The first configuration is used by the radio terminal while the cell DTX or cell DRX based on the third configuration is deactivated. The second configuration is used by the radio terminal while the cell DTX or cell DRX based on the third configuration is activated.

In a fourth aspect, a method performed by a radio access network node includes transmitting to a radio terminal, via one or more RRC messages, a first configuration related to downlink reception or uplink transmission, a second configuration related to the downlink reception or the uplink transmission, provided in addition to the first configuration, and a third configuration related to cell DTX or cell DRX. The first configuration is used by the radio terminal while the cell DTX or cell DRX based on the third configuration is deactivated. The second configuration is used by the radio terminal while the cell DTX or cell DRX based on the third configuration is activated.

In a fifth aspect, a radio terminal is configured to receive a first configuration related to a plurality of CDRX parameters, and a second configuration related to cell DTX. The radio terminal is configured to, if the cell DTX based on the second configuration is deactivated, perform CDRX according to a CDRX pattern defined by the first configuration. The radio terminal is configured to, if the cell DTX based on the second configuration is activated, modify at least one of the plurality of CDRX parameters, based on the second configuration related to the cell DTX, depending on an alignment relationship between a CDRX pattern defined by the first configuration and a cell DTX pattern defined by the second configuration, and perform CDRX according to a CDRX pattern based on the modified at least one CDRX parameter.

In a sixth aspect, a method performed by a radio terminal includes the steps of:
(a) receiving a first configuration related to a plurality of CDRX parameters, and a second configuration related to cell DTX;
(b) if the cell DTX based on the second configuration is deactivated, performing CDRX according to a CDRX pattern defined by the first configuration; and
(c) if the cell DTX based on the second configuration is activated, modifying at least one of the plurality of CDRX parameters, based on the second configuration related to the cell DTX, depending on an alignment relationship between a CDRX pattern defined by the first configuration and a cell DTX pattern defined by the second configuration, and performing CDRX according to a CDRX pattern based on the modified at least one CDRX parameter.

In a seventh aspect, a radio terminal is configured to receive a first configuration indicating periodic resource allocation for downlink reception or uplink transmission, and a second configuration related to cell DTX or cell DRX. The radio terminal is configured to, if the cell DTX or cell DRX based on the second configuration is deactivated, perform the downlink reception or uplink transmission according to the periodic resource allocation defined by the first configuration. The radio terminal is configured to, if the cell DTX or cell DRX based on the second configuration is activated, adjust the periodic resource allocation based on the second configuration related to the cell DTX or cell DRX, and perform the downlink reception or uplink transmission according to the adjusted periodic resource allocation.

In an eighth aspect, a method performed by a radio terminal includes the steps of:
(a) receiving a first configuration indicating periodic resource allocation for downlink reception or uplink transmission, and a second configuration related to cell DTX or cell DRX;
(b) if the cell DTX or cell DRX based on the second configuration is deactivated, performing the downlink reception or uplink transmission according to the periodic resource allocation defined by the first configuration; and
(c) if the cell DTX or cell DRX based on the second configuration is activated, adjusting the periodic resource allocation based on the second configuration related to the cell DTX or cell DRX, and performing the downlink reception or uplink transmission according to the adjusted periodic resource allocation.

In a ninth-seventh aspect, a program includes a set of instructions (software code) that, when loaded into a computer, causes the computer to perform the operations or methods of the radio terminal or radio access network node described in the above aspects. Advantageous Effects **of Invention**

According to the aspects described above, it is possible to provide apparatuses, methods, and programs that contribute to solving at least one of a plurality of problems, including the problems described above.

### Brief Description of Drawings

Fig. 1 is a diagram showing an example configuration of a radio communication system related to one or more example embodiments.
Fig. 2 is a diagram showing a CDRX cycle.
Fig. 3 is a diagram showing examples of a plurality of CDRX-related timers.
Fig. 4 is a diagram showing examples of a plurality of CDRX-related timers.
Fig. 5 is a diagram showing a cell DTX pattern.
Fig. 6 is a diagram showing a cell DRX pattern.
Fig. 7 shows an example of the relationship between an ON duration of cell DTX and an ON duration of CDRX.
Fig. 8 is a flowchart showing an example of operation of a UE related to one or more example embodiments.
Fig. 9 is a flowchart showing an example of operation of a UE related to one or more example embodiments.
Fig. 10 is a diagram showing an example of signaling between a UE and a RAN node related to one or more example embodiments.
Fig 11 is a diagram showing a specific example of a cell DTX configuration related to one or more example embodiments.
Fig. 12 is a flowchart showing an example of operation of a UE related to one or more example embodiments.
Fig. 13 is a flowchart showing an example of operation of a UE related to one or more example embodiments.
Fig. 14 is a flowchart showing an example of operation of a UE related to one or more example embodiments.
Fig. 15 is a block diagram showing an example configuration of a UE related to one or more example embodiments.
Fig. 16 is a block diagram showing an example configuration of a radio access network node related to one or more example embodiments.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be implemented independently or in any suitable combination. These multiple example embodiments have novel features that differ from one another. Accordingly, these multiple example embodiments contribute to achieving different objectives or solving different problems and contribute to achieving different advantages.

Each of the drawings or figures is merely an example to illustrate one or more example embodiments. Each figure may not be associated with only one particular example embodiment but may be associated with one or more other example embodiments. As will be appreciated by those of ordinary skill in the art, various features or steps described with respect to any one of the figures may be combined with features or steps illustrated in one or more other figures to produce, for example, example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

The following example embodiments are primarily described in the context of the 3GPP fifth generation mobile communication system (5G system). However, these example embodiments may also be applied to other radio communication systems that support technologies similar to 3GPP cell DTX and cell DRX.

As used in this specification, "if" can be interpreted to mean "when", "while", "at or around the time", "after", "upon", "in response to determining", "in accordance with a determination", or "in response to detecting", depending on the context. These expressions can be interpreted to mean the same thing, depending on the context.

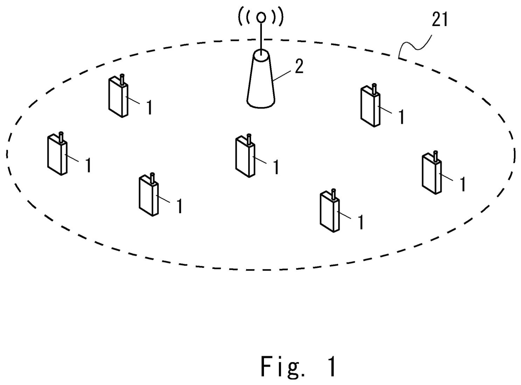

First, the configuration and operation of a plurality of network elements common to a plurality of example embodiments are described. Fig. 1 shows an example configuration of a radio communication system related to a plurality of example embodiments. Each element (or network function) shown in Fig. 1 can be implemented, for example, as a network element on dedicated hardware, as a software instance running on dedicated hardware, or as a virtualized function instantiated on an application platform.

In the example shown in Fig. 1, the radio communication system includes a plurality of UEs 1 and a radio access network (RAN) node 2. In the following, unless otherwise specified, the term "UE 1" refers to matters common to the plurality of UEs 1. The UE 1 may be referred to by other terms, such as a radio terminal, a mobile terminal, a mobile station, or a wireless transmit receive unit (WTRU). The RAN node 2 may be referred to by other terms, such as a network, a base station, or a radio station. The UE 1 includes at least one radio transceiver and communicates with the RAN node 2. The RAN node 2 manages, operates, or provides a cell 21 and communicates with a plurality of UEs 1 within the cell 21 using cellular communication technology (i.e., NR Radio Access Technology). These communications include downlink and uplink transmissions. Downlink transmissions include the transmission of cell-specific synchronization signals, the transmission of cell-specific and UE-specific reference signals, the transmission of broadcast channels (e.g., Physical Broadcast Channel (PBCH)), the transmission of control channels (e.g., PDCCH), and the transmission of data transmission channels (e.g., Physical Downlink Shared Channel (PDSCH)). Uplink transmissions include the transmission of reference signals, the transmission of random access channels (i.e., Physical RACH (PRACH)), the transmission of control channels (e.g., PUCCH), and the transmission of data transmission channels (e.g., PUSCH).

The RAN node 2 may provide multiple cells including the cell 21, and the UE 1 may be connected to multiple cells provided by the RAN node 2 simultaneously. In other words, the UE 1 may perform carrier aggregation (CA) between multiple cells provided by the RAN node 2. Additionally, the UE 1 may be connected to the RAN node 2 and another RAN node simultaneously for dual connectivity (DC).

The RAN node 2 may be a Next Generation Radio Access Network (NG-RAN) node. An NG-RAN node may be a gNB or an ng-eNB. An ng-eNB is a node that provides Evolved Universal Mobile Telecommunications System (UMTS) Terrestrial Radio Access (E-UTRA) user plane and control plane protocol termination to UEs and is connected to a 5G Core Network (5GC) via an NG interface. The RAN node 2 may be a Central Unit (e.g., gNB-CU) in a cloud RAN (C-RAN) deployment, or a combination of a CU and one or more Distributed Units (e.g., gNB-DUs). C-RAN is also referred to as CU/DU split. Furthermore, the CU may include a Control Plane (CP) Unit (e.g., gNB-CU-CP) and one or more User Plane (UP) Units (e.g., gNB-CU-UP). Accordingly, the RAN node 2 may be a CU-CP or a combination of a CU-CP and a CU-UP. A CU may be a logical node that hosts the Radio Resource Control (RRC), Service Data Adaptation Protocol (SDAP), and Packet Data Convergence Protocol (PDCP) protocols of a gNB (or the RRC and PDCP protocols of a gNB). A DU may be a logical node that hosts the Radio Link Control (RLC), Medium Access Control (MAC), and Physical (PHY) layers of a gNB.

The UE 1 and the RAN node 2 support connected mode DRX (CDRX). If CDRX is configured, the UE 1 does not need to continuously monitor a PDCCH. CDRX is characterized by its on-duration, inactivity timer, retransmission timer, cycle, and active time. The on-duration is the duration that the UE 1 waits for, after waking up, to receive PDCCHs. If the UE 1 successfully decodes a PDCCH, it stays awake and starts the inactivity timer. The inactivity timer is the duration that the UE 1 waits to successfully decode a next PDCCH from the last successful decoding of a PDCCH. If PDCCH decoding fails until the inactive timer expires, the UE 1 can return to sleep. The retransmission timer is the duration during which the UE 1 must be awake to receive retransmissions. The DRX cycle specifies a periodic repetition of the on-duration, followed by a period of possible inactivity. The active time is the total duration during which the UE 1 monitors a PDCCH. The active time includes the on-duration within a DRX cycle, the time during which the UE 1 performs continuous reception while the inactivity timer has not expired, and the time during which the UE 1 performs continuous reception while waiting for a retransmission opportunity.

CDRX is controlled by RRC. The CDRX-related parameters provided to the UE from the network by the RRC configuration (DRX-Config) include the following: drx-onDurationTimer, drx-SlotOffset, drx-InactivityTimer, drx-RetransmissionTimerDL (per Downlink (DL) HARQ process except for the broadcast process), drx-RetransmissionTimerUL (per Uplink (UL) HARQ process),drx-LongCycleStartOffset, drx-ShortCycle (optional), drx-ShortCycleTimer (optional), drx-HARQ-RTT-TimerDL (per DL HARQ process except for the broadcast process), and drx-HARQ-RTT-TimerUL (per UL HARQ process). Multiple serving cells of a MAC entity of the UE 1 may be configured by the RRC with two CDRX groups having different CDRX parameters. As described above, the term "CDRX group" is used in this description instead of the term "DRX group" used in the 3GPP specification. If two CDRX groups are configured, each serving cell is uniquely assigned to one of the two groups. The CDRX parameters that are configured individually for each CDRX group are drx-onDurationTimer and drx-InactivityTimer. On the other hand, the CDRX parameters common to the multiple CDRX groups are drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

The drx-onDurationTimer is a timer that measures the CDRX on-duration. The drx-onDurationTimer specifies the duration for decoding PDCCH at the beginning of each DRX cycle (DRX ON) before entering power saving mode (CDRX OFF).

The drx-SlotOffset specifies the delay time before starting the drx-onDurationTimer. In other words, the drx-SlotOffset defines the start of the CDRX on-duration (or drx-onDurationTimer) based on the start of a subframe.

The drx-InactivityTimer defines the duration after a PDCCH occasion that indicates a new uplink UL, downlink, or sidelink transmission for the MAC entity. In other words, the drx-InactivityTimer indicates the duration that the UE 1 waits to successfully decode a (next) PDCCH from the last successful decoding of a PDCCH.

The drx-RetransmissionTimerDL indicates the maximum duration until a downlink retransmission is received. In other words, the drx-RetransmissionTimerDL indicates the duration during which the UE 1 shall be awake to receive a downlink retransmission.

The drx-RetransmissionTimerUL indicates the maximum duration until a grant (uplink grant) for uplink retransmission is received. In other words, the drx-RetransmissionTimerUL indicates the duration during which the UE 1 shall be awake to receive a grant for uplink retransmission.

The drx-LongCycleStartOffset indicates the long DRX cycle (drx-LongCycle) and the start offset (drx-StartOffset). The drx-StartOffset defines the subframe where the long DRX cycle and short DRX cycle start.

The drx-ShortCycle (optional) indicates the short DRX cycle.

The drx-ShortCycleTimer (optional) indicates the duration for which the UE 1 follows the short DRX cycle. The drx-ShortCycleTimer indicates the timer value as a multiple of the short DRX cycle (drx-ShortCycle), and the timer value can be 1 to 16, i.e., 1 to 16 short DRX cycles.

The drx-HARQ-RTT-TimerDL indicates the minimum duration or interval before a DL assignment for HARQ retransmission is expected by the MAC entity. In other words, the drx-HARQ-RTT-TimerDL defines the minimum amount of time before the UE 1 can expect a downlink retransmission after sending a hybrid automatic repeat request (HARQ) negative acknowledge (NACK) in the uplink.

The drx-HARQ-RTT-TimerUL indicates the minimum duration or interval before a grant for uplink retransmission is expected by the MAC entity. In other words, the drx-HARQ-RTT-TimerUL defines the minimum amount of time before the UE 1 can expect to receive a downlink grant for retransmission after performing a PUSCH transmission.

If CDRX is configured, the active time for multiple serving cells in a CDRX group includes, among other time periods, the time while:
- the drx-onDurationTimer or drx-InactivityTimer configured for the CDRX group is running; or
- the drx-RetransmissionTimerDL or drx-RetransmissionTimerUL is running on any of the serving cells in the CDRX group; or
- a scheduling request is sent on a PUCCH and is pending; or
- a PDCCH indicating a new transmission to the C-RNTI of the MAC entity has not been received after successful reception of a random access response to a random access preamble not selected by the MAC entity.

The network, specifically the RAN node 2, provides the UE 1 with an RRC configuration (i.e., DRX-Config) related to CDRX by using a UE-specific (or dedicated) RRC message, specifically an RRCReconfiguration message. The DRX-Config is contained in a MAC-CellGroupConfig within a CellGroupConfig carried by an RRCReconfiguration message.

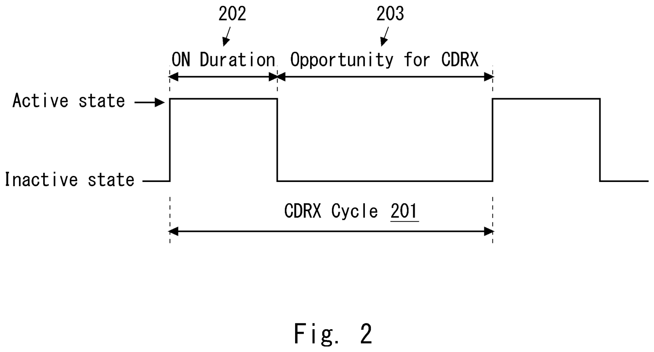

Fig. 2 shows an example of a CDRX cycle. As shown in Fig. 2, one CDRX cycle 201 includes an ON duration 202 at the beginning of the cycle. The ON duration 202 is one of the CDRX active times of the UE 1. After the ON duration 202, there is a CDRX opportunity 203. During the CDRX opportunity 203, the UE 1 can enter sleep mode if neither the inactivity timer (drx-InactivityTimer) nor the retransmission timers (drx-RetransmissionTimerDL, drx-RetransmissionTimerUL) are running.

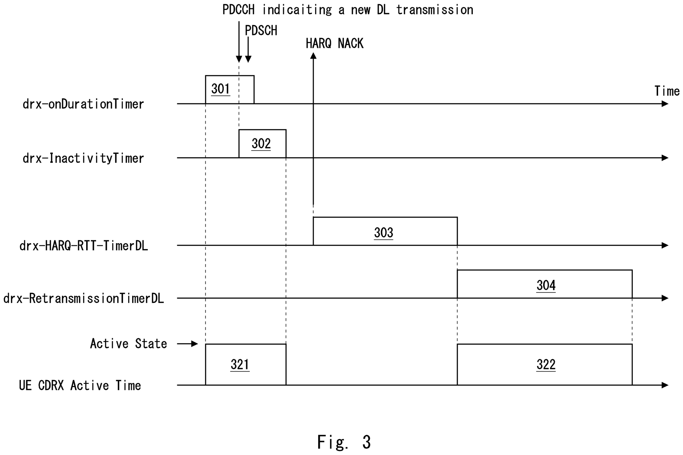

Fig. 3 is a diagram showing the relationship between multiple CDRX-related timers and the CDRX active time with respect to downlink reception by the UE 1. If the UE 1 receives a PDCCH indicating a new downlink (DL) transmission while the on-duration timer (drx-onDurationTimer) 301 is running, the UE 1 starts or restarts the inactivity timer (drx-InactivityTimer) 302. The MAC entity of the UE 1 starts or restarts the inactivity timer (drx-InactivityTimer) 302 at the first symbol after PDCCH reception ends. If the UE 1 fails in PDSCH reception, the UE 1 transmits a HARQ NACK and starts the HARQ round trip time (RTT) timer (drx-HARQ-RTT-TimerDL) 303 for the corresponding HARQ process. The MAC entity of the UE 1 starts the HARQ RTT timer (drx-HARQ-RTT-TimerDL) 303 for the corresponding HARQ process in the first symbol after the end of the transmission carrying the HARQ feedback (NACK). After the HARQ RTT timer (drx-HARQ-RTT-TimerDL) 303 expires, the UE 1 immediately starts the retransmission timer (drx-RetransmissionTimerDL) 304 for the corresponding HARQ process. The MAC entity of the UE 1 starts the retransmission timer (drx-RetransmissionTimerDL) 304 at the first symbol after the expiration of the HARQ RTT timer (drx-HARQ-RTT-TimerDL) 303. In the example shown in Fig. 3, the CDRX active time includes the time period 321 during which the on-duration timer (drx-onDurationTimer) 301 and the inactivity timer (drx-InactivityTimer) 302 are running, and the time period 322 during which the retransmission timer (drx-RetransmissionTimerDL) 304 is running. During the CDRX active time, the UE 1 is required to monitor a PDCCH.

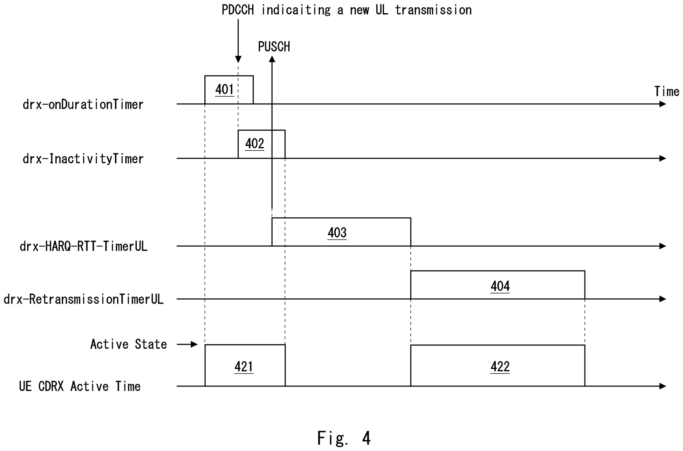

Fig. 4 is a diagram showing the relationship between multiple CDRX-related timers and the CDRX active time with respect to uplink transmission of the UE 1. If the UE 1 receives a PDCCH indicating a grant for a new uplink (UL) transmission while the on-duration timer (drx-onDurationTimer) 401 is running, the UE 1 starts or restarts the inactivity timer (drx-InactivityTimer) 402. The MAC entity of the UE 1 starts or restarts the inactivity timer (drx-InactivityTimer) 402 at the first symbol after PDCCH reception ends. After the PUSCH transmission, the UE 1 starts the HARQ RTT timer (drx-HARQ-RTT-TimerUL) 403 for the corresponding HARQ process. The MAC entity of the UE 1 starts the HARQ RTT timer (drx-HARQ-RTT-TimerUL) 403 at the first symbol after the end of the first transmission of the PUSCH transmission. After the HARQ RTT timer (drx-HARQ-RTT-TimerUL) 403 expires, the UE 1 immediately starts the retransmission timer (drx-RetransmissionTimerUL) 404 for the corresponding HARQ process. The MAC entity of the UE 1 starts the retransmission timer (drx-RetransmissionTimerUL) 404 at the first symbol after the expiration of the HARQ RTT timer (drx-HARQ-RTT-TimerUL) 403. In the example shown in Fig. 4, the CDRX active time includes the time period 421 during which the on-duration timer (drx-onDurationTimer) 401 and the inactivity timer (drx-InactivityTimer) 402 are running, and the time period 422 during which the retransmission timer (drx-RetransmissionTimerUL) 404 is running. During the CDRX active time, the UE 1 is required to monitor a PDCCH.

Furthermore, the UE 1 and the RAN node 2 support cell DTX and cell DRX. As described above, in the present description, the terms "cell DTX ON duration," "cell DTX off duration," "cell DRX ON duration," and "cell DRX off duration" are used with respect to cell DTX/DRX. The cell DTX/DRX ON duration refers to the duration, time, or period during which a cell is active and can transmit and receive all necessary cell common channels and signals, as well as UE-specific signals and channels. In contrast, the cell DTX/DRX off duration refers to the duration, time, or period during which the cell is in an inactive state for NES and does not transmit or receive, or is allowed to maintain only restricted transmission or reception. The cell DTX/DRX ON duration may also be referred to as the cell DTX/DRX ON time or period, or the cell DTX/DRX active time, period, or duration. The cell DTX/DRX off duration may also be referred to as the cell DTX/DRX off time or off period, or the cell DTX/DRX inactive (or non-active) time, period, or duration.

If the cell DTX of the cell 21 is activated, the RAN node 2 may not perform downlink transmission in the cell 21 during the off duration of the cell DTX, or may maintain only restricted downlink transmission. Similarly, if the cell DRX of the cell 21 is activated, the RAN node 2 may not perform uplink reception in the cell 21 during the off duration of the cell DRX, or may maintain only restricted uplink reception. In the first example, during the cell DTX/DRX off duration, the RAN node 2 is expected to turn off all transmission or reception of data traffic and reference signals in the cell 21. In the second example, during the cell DTX/DRX off duration, the RAN node 2 is expected to turn off only the transmission or reception of data traffic in the cell 21. That is, the RAN node 2 continues to transmit or receive reference signals. In the third example, during the cell DTX/DRX off duration, the RAN node 2 is expected to turn off dynamic data transmission or reception in the cell 21. That is, the RAN node 2 is expected to continue to transmit or receive on periodic resources such as SPS, CG PUSCH, SR, RACH, and SRS. In the fourth example, during the cell DTX off duration, the RAN node 2 is expected to transmit only reference signals (e.g., CSI-RS for measurement) in the cell 21.

Cell DTX mode and cell DRX mode can be configured and operated separately (e.g., one RRC configuration set for downlink and another RRC configuration set for uplink). Cell DTX and cell DRX can also be configured and operated together. For each cell DTX/DRX configuration, parameters including at least periodicity or cycle, start offset, and ON duration can be configured. The start offset defines the starting point of the cell DTX/DRX cycle (e.g., subframe or slot). The RAN node 2 may provide cell DTX/DRX configuration information to the UE 1 via cell-specific (or cell-common) or UE-specific RRC signaling. The cell-specific RRC signaling may be system information (e.g., SIB). The UE-specific RRC signaling may be an RRC Reconfiguration message. If system information is used to send cell DTX/DRX configuration information, the update of the cell DTX/DRX configuration information may be performed using a system information modification procedure.

Cell DTX and cell DRX may be activated or deactivated separately or together. Cell DTX/DRX activation may be performed using Layer 1, Layer 2, or Layer 3 (L1/L2/L3) signaling. The RAN node 2 may transmit L1/L2/L3 signaling indicating cell DTX/DRX activation. This indication may be referred to as NES mode indication, NES activation indication, etc. The L1/L2/L3 signaling may be UE-specific, UE group-specific, or cell-specific (i.e., cell-common).

More specifically, cell DTX/DRX may be activated and deactivated implicitly. In other words, cell DTX/DRX may be activated immediately once it is configured by UE-specific RRC signaling, and may be deactivated once the RRC configuration is released. Additionally, cell DTX/DRX may be dynamically activated and deactivated via L1/L2 signaling. Dynamic L1/L2 signaling may be UE-specific or UE group-specific.

The RAN node 2 may configure multiple sets of cell DTX configuration to the UE 1 via RRC signaling and may activate one applicable cell DTX configuration set using L1/L2 signaling. Similarly, the RAN node 2 can configure multiple sets of cell DRX configuration to the UE 1 via RRC signaling and may activate one applicable cell DRX configuration set using L1/L2 signaling.

UE-specific L1 signaling may be a DCI format with Cyclic Redundancy Check (CRC) bits scrambled by a UE-specific RNTI (e.g., C-RNTI). In other words, UE-specific L1 signaling may be a PDCCH that carries CRC bits scrambled by a UE-specific RNTI.

UE group-specific L1 signaling may be a DCI format with CRC bits scrambled by a UE group-specific RNTI. In other words, UE group-specific L1 signaling may be a PDCCH carrying CRC bits scrambled by a UE group-specific RNTI. The UE group may only include NES-capable UEs in the cell 21, excluding NES-incompatible legacy UEs. The UE group-specific RNTI may be a newly defined RNTI for cell DTX/DRX.

Cell-specific L1 signaling may be a DCI format with CRC bits scrambled by a cell-specific RNTI. In other words, cell-specific L1 signaling may be a PDCCH that carries CRC bits scrambled by a cell-specific RNTI. The cell-specific or cell-common RNTI may be a System Information RNTI (SI-RNTI) or a Paging RNTI (P-RNTI), or it may be an RNTI newly defined for cell DTX/DRX. Specifically, cell-specific L1 signaling may be a DCI containing a short message indicating a change in system information, or a PDCCH carrying the DCI with CRC bits scrambled by a P-RNTI. The DCI may indicate a short message indicating activation of cell DTX/DRX or NES mode in addition to a short message indicating a change in system information.

UE-specific L2 signaling may be a MAC CE transmitted in a PDSCH that is scheduled by a DCI format with CRC bits scrambled by a UE-specific RNTI. UE group-specific L2 signaling may be a MAC CE transmitted in a PDSCH scheduled by a DCI format with CRC bits scrambled by a UE group-specific RNTI. Cell-specific L2 signaling may be a MAC CE transmitted in a PDSCH scheduled by a DCI format with CRC bits scrambled by a cell-specific RNTI.

Cell-specific L3 signaling may be system information (e.g., SIB). UE-specific L3 signaling may be a UE-dedicated RRC message, specifically an RRC Reconfiguration message.

The cell DTX/DRX ON duration may be extended. The cell DTX ON duration and the cell DRX ON duration may be extended separately or together. If the RAN node 2 wants to extend the cell DTX ON duration or the cell DRX ON duration or both, it may send L1/L2 signaling to the UE 1 to trigger the extension of the ON duration. This L1/L2 signaling may be cell-specific (or cell-common), UE group-specific, or UE-specific. Specific examples of L1/L2 signaling for extending the cell DTX/DRX ON duration are the same as those described for L1/L2 signaling for activating cell DTX/DRX. Extension of the cell DTX/DRX ON duration within a cell DTX/DRX cycle is accompanied by a reduction of the cell DTX/DRX OFF duration within that cycle.

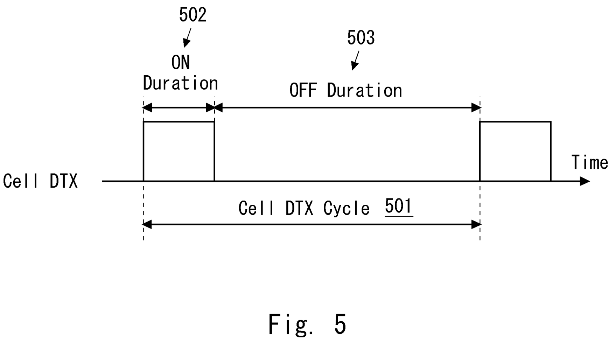

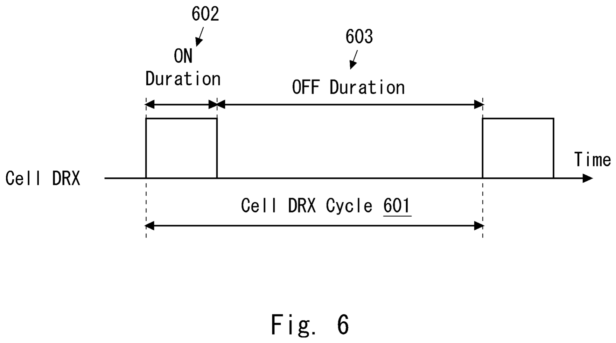

Fig. 5 shows an example of a cell DTX cycle. In the example shown in Fig. 5, a single cell DTX cycle 501 includes the ON duration 502 at the beginning of the cycle. The ON duration 502 is followed by the OFF duration 503. Fig. 6 shows an example of a cell DRX cycle. In the example of Fig. 6, a single cell DRX cycle 601 includes the ON duration 602 at the beginning of the cycle. The ON duration 602 is followed by the OFF duration 603.

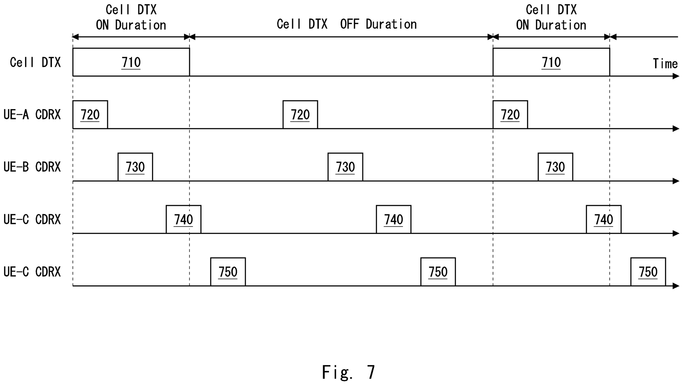

Fig. 7 illustrates an example of the relationship between a cell DTX ON duration and a UE CDRX ON duration. In the example of Fig. 7, the CDRX cycles for UE-A, UE-B, UE-C, and UE-D are the same length, but their start offsets differ from each other. The CDRX cycle length common to UE-A, UE-B, UE-C, and UE-D is half the length of the cell DTX cycle.

UE-A's CDRX ON durations 720 fall within any one of the cell DTX ON durations 710 every two cycles. Similarly, UE-B's CDRX ON durations 730 fall within any one of the cell DTX ON durations 710 every two cycles. Therefore, it might be said that the CDRX patterns of UE-A and UE-B are sufficiently aligned with the cell DTX pattern. However, depending on the network implementation, the CDRX configurations for UE-A and UE-B may be updated, for example, in response to cell DTX activation, to eliminate CDRX ON durations 720 and 730 that fall outside the cell DTX ON durations 710,.

The UE-C's CDRX ON durations 740 partially overlap with any one of the cell DTX ON durations 710 every two cycles. Therefore, it might be said that the UE-C's CDRX pattern is somewhat aligned with the cell DTX pattern. Alternatively, it might be said that the UE-C's CDRX pattern is not sufficiently aligned with the cell DTX pattern. Depending on the network implementation, the UE-C's CDRX configuration may be updated, for example, in response to the activation of the cell DTX, such that the UE-C's CDRX ON durations 740 fall entirely within the cell DTX ON durations 710 every two cycles. This can be achieved by changing the start offset of the UE-C's CDRX cycle, for example.

On the other hand, UE-D's CDRX ON durations 750 do not overlap, even partially, with the cell DTX ON durations of 710. Therefore, UE-D's CDRX pattern is not aligned with the cell DTX pattern. Depending on the network implementation, the UE-D's CDRX configuration may be updated, for example, in response to the activation of the cell DTX, such that the UE-D's CDRX ON durations 750 fall entirely within the cell DTX ON durations 710 every two cycles. This can be achieved by changing the start offset of the UE-D's CDRX cycle, for example.

### First Example Embodiment

An example configuration of a radio communication system according to the present example embodiment is the same as the example configuration described with reference to Fig. 1. The present example embodiment provides details on switching of configurations related to downlink reception or uplink transmission (e.g., UE CDRX pattern configuration) in response to the dynamic activation and deactivation of cell DTX/DRX.

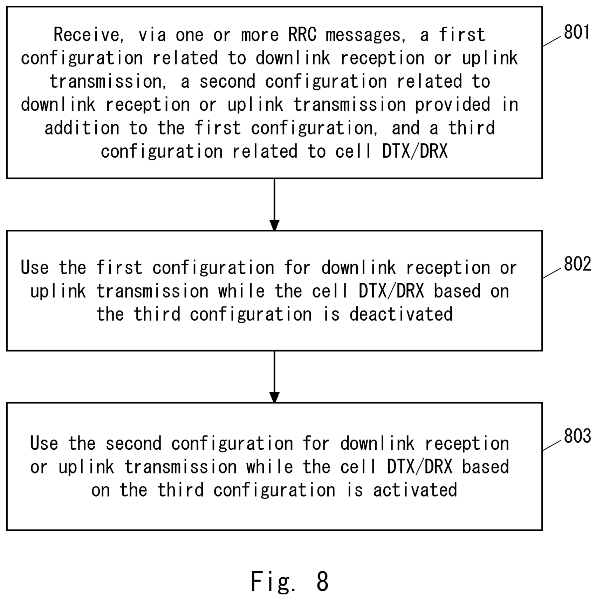

Fig. 8 shows an example of the operation of the UE 1. In step 801, the UE 1 receives a first configuration, a second configuration, and a third configuration via one or more RRC messages. Specifically, the UE 1 receives these configurations from the RAN node 2 via one or more RRC messages. The first configuration relates to downlink reception or uplink transmission. The second configuration is provided in addition to the first configuration and relates to the same downlink reception or uplink transmission as the first configuration. Therefore, if the UE 1 receives the second configuration, it maintains the second configuration in addition to the first configuration. In other words, the UE 1 maintains or stores both the first configuration and the second configuration. The UE 1 does not overwrite the stored first configuration with the second configuration. The information element containing the second configuration is separate and independent from the information element containing the first configuration. The UE 1 handles these two information elements distinctly. The third configuration relates to cell DTX/DRX.

The second configuration, which is provided in addition to the first configuration, may contain exactly the same information elements or items as the first configuration. Alternatively, the second configuration may contain only a subset of the information elements or items present in the first configuration. Specifically, the second configuration may contain configurations of only one or more CDRX parameters that need to be changed while the cell DTX/DRX is active, rather than all CDRX parameters included in the first configuration.

The first and second configurations may relate to downlink reception. Each of the first and second configurations may define periodic opportunities or resources where the downlink reception is performed. More specifically, each of the first and second configurations may contain a configuration (e.g., DRX-Config) related to a CDRX pattern. The first configuration may be a DRX-Config information element, and the second configuration may be an additional, distinct drx-Config information element. Additionally or alternatively, each of the first and second configurations may contain a configuration (e.g., SPS-Config) related to periodic resource allocation for transmission of a downlink physical channel (e.g., PDSCH) carrying downlink data. In other words, each of the first and second configurations may contain a Semi-Persistent Scheduling (SPS) configuration.

The first and second configurations may relate to uplink transmission. Each of the first and second configurations may define periodic opportunities or resources where the uplink transmission is performed. More specifically, each of the first and second configurations may contain a configuration (e.g., SchedulingRequestResourceConfig) related to an uplink resource to be used for Scheduling Request (SR) transmission. Additionally or alternatively, each of the first and second configurations may contain a configuration (e.g., ConfiguredGrantConfig) related to periodic resource allocation for transmitting an uplink physical channel (e.g., PUSCH) carrying uplink data. In other words, each of the first and second configurations may be a Configured Grant (CG) configuration. Additionally or alternatively, each of the first and second configurations may contain a configuration related to uplink resources to be used for transmitting an uplink reference signal. The uplink reference signal may be a Sounding Reference Signal (SRS). Additionally or alternatively, each of the first and second configurations may contain a configuration related to uplink resources to be used for transmitting a physical random access channel (e.g., RACH-ConfigDedicated or BeamFailureRecoveryConfig).

In step 801, the one or more RRC messages carrying the first, second, and third configurations may be at least one cell-specific (or cell-common) RRC message, at least one UE-specific RRC message, or a combination thereof. The cell-specific RRC message may be system information (e.g., a SIB1 message). The UE-specific RRC message may be an RRC Reconfiguration message.

In steps 802 and 803, the UE 1 switches between the first configuration and the second configuration to be used for the downlink reception or uplink transmission, depending on whether the cell DTX/DRX based on the third configuration is activated or deactivated. The order of steps 802 and 803, as shown in Fig. 8, is for illustrative purposes only and does not have to be followed in this order. As mentioned previously, cell DTX/DRX may be activated and deactivated dynamically via L1/L2 signaling. Dynamic L1/L2 signaling may be UE-specific or UE group-specific.

Specifically, in step 802, while the cell DTX/DRX based on the third configuration is deactivated, the UE 1 uses the first configuration for the downlink reception or uplink transmission. In other words, if or in cases where the cell DTX/DRX based on the third configuration is deactivated, the UE 1 uses the first configuration for the downlink reception or uplink transmission. In contrast, in step 803, while the cell DTX/DRX based on the third configuration is activated, the UE 1 uses the second configuration for the downlink reception or uplink transmission. In other words, if or in cases where the cell DTX/DRX based on the third configuration is activated, the UE 1 uses the second configuration for the downlink reception or uplink transmission.

Even if the first and third configurations are provided to the UE 1, the second configuration need not necessarily be provided to the UE 1. For example, if the first and second configurations are CDRX configurations, the RAN node 2 may send the second configuration to UEs having the first configuration that defines a CDRX pattern not sufficiently aligned with the cell DTX pattern, such as the UE-C and UE-D shown in Fig. 7. On the other hand, the RAN node 2 may not send the second configuration to UEs with the first configuration that defines a CDRX pattern sufficiently aligned with the cell DTX pattern, such as UE-A and UE-B shown in Fig. 7. If the first configuration is received but the second configuration is not received, the UE 1 may use the first configuration for the downlink reception or uplink transmission regardless of whether the cell DTX/DRX based on the third configuration is activated or deactivated.

The third configuration may include a plurality of cell DTX/DRX configurations (i.e., multiple sets of cell DTX/DRX configurations). In this case, the second configuration may include a plurality of second configurations, each associated with a respective one of the plurality of cell DTX/DRX configurations. While the cell DTX/cell DRX is deactivated, the UE 1 may use one of the plurality of second configurations corresponding to an activated one of the plurality of cell DTX/cell DRX configurations.

The operation of the UE 1 and the RAN node 2 described with reference to Fig 8 contributes to facilitating switching of the configuration for downlink reception or uplink transmission between a normal configuration and a configuration aligned (more appropriately) with the cell DTX/DRX pattern, in response to the dynamic activation and deactivation of cell DTX/DRX. More specifically, in Fig 8, the second configuration is sent via an RRC message. Therefore, the operation in Fig 8 allows the RAN node 2 to more flexibly configure settings for downlink reception or uplink transmission for use while cell DTX/DRX is activated, compared to an implementation where the second configuration is sent via L1 signaling. Additionally, according to the operation of Fig 8, the UE 1 can switch between the retained first configuration and the retained second configuration depending on the dynamic activation or deactivation of cell DTX/DRX. Therefore, the RAN node 2 does not need to send an updated RRC configuration each time the cell DTX/DRX is dynamically activated or deactivated.

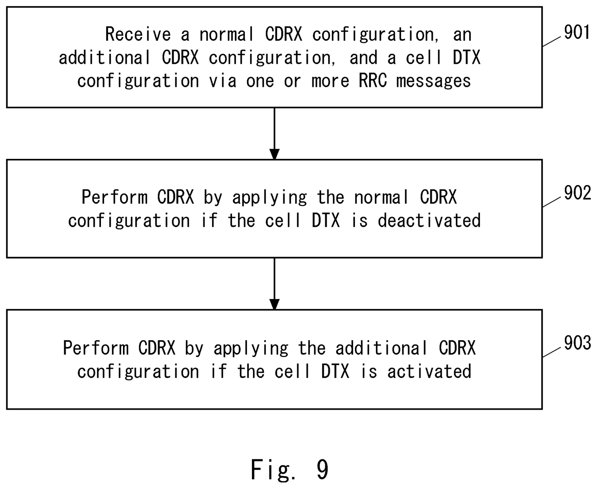

Fig. 9 illustrates a specific example of the operation of the UE 1 described with reference to Fig. 8. Specifically, Fig. 9 is directed toward a case where the first and second configurations are CDRX configurations and the third configuration is a cell DTX configuration. In step 901, the UE 1 receives a normal CDRX configuration, an additional CDRX configuration, and a cell DTX configuration from the RAN node 2 via one or more RRC messages. The additional CDRX configuration is provided in addition to the normal CDRX configuration. Therefore, if the UE 1 receives the additional CDRX configuration, it retains the additional CDRX configuration in addition to the normal CDRX configuration. In other words, the UE 1 retains or stores both the normal CDRX configuration and the additional CDRX configuration. The UE 1 does not overwrite the stored normal CDRX configuration with the additional CDRX configuration. The information element containing the additional CDRX configuration is separate and independent from the information element containing the normal CDRX configuration. The UE 1 handles these two information elements distinctly.

In steps 902 and 903, the UE 1 switches between the normal CDRX configuration and the additional CDRX configuration to be applied to CDRX, depending on whether cell DTX is activated or deactivated. The order of steps 902 and 903, as shown in Fig. 9, is for illustrative purposes only and does not have to be followed in this order. As mentioned previously, cell DTX may be activated and deactivated dynamically via L1/L2 signaling. Dynamic L1/L2 signaling may be UE-specific or UE group-specific.

In step 902, while the cell DTX is deactivated, the UE 1 performs CDRX by applying the normal CDRX configuration. In other words, if or in cases where the cell DTX is deactivated, the UE 1 applies the normal CDRX configuration. In contrast, in step 903, while the cell DTX is activated, the UE 1 performs CDRX by applying the additional CDRX configuration. In other words, if or in cases where the cell DTX is activated, the UE 1 applies the additional CDRX configuration.

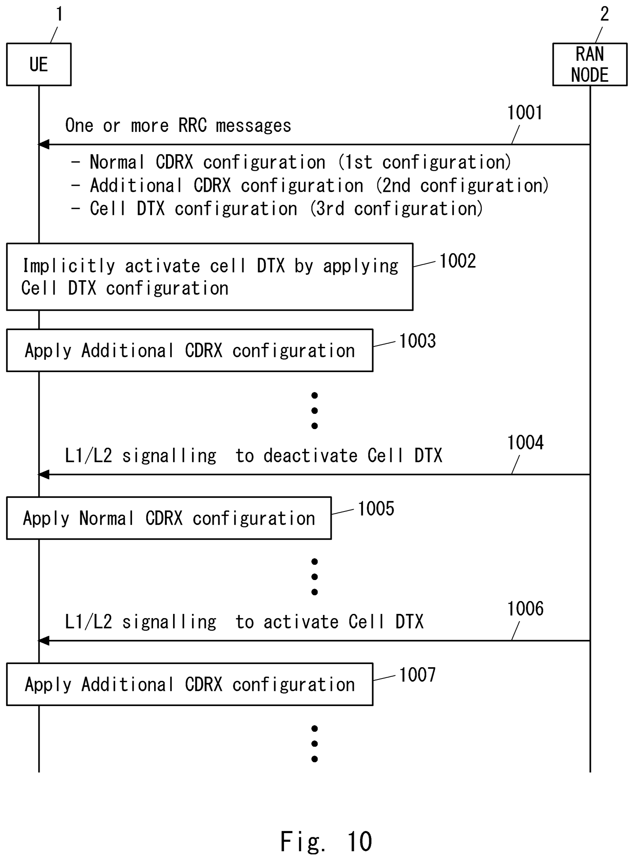

Fig. 10 illustrates one specific example of the operation of the UE 1 and the RAN node 2 described with reference to Fig. 8. Similar to Fig. 9, Fig. 10 is directed toward a case where the first and second configurations are CDRX configurations and the third configuration is a cell DTX configuration. In step 1001, the RAN node 2 transmits one or more RRC messages to the UE 1. The one or more RRC messages carry a normal CDRX configuration (the first configuration), an additional CDRX configuration (the second configuration), and a cell DTX configuration (the third configuration). For example, the normal CDRX configuration, the additional CDRX configuration, and the cell DTX configuration may be sent in a single RRC message (e.g., an RRC Reconfiguration message). In another example, the normal CDRX configuration may be sent first in an RRC message (e.g., an RRC Reconfiguration message), and the additional CDRX configuration and the cell DTX configuration may be sent in another RRC message (e.g., an RRC Reconfiguration message) at the time the CDRX is to be activated.

In step 1002, the UE 1 applies the received cell DTX configuration and implicitly activates the cell DTX. In step 1003, in response to the implicit activation of the cell DTX, the UE 1 applies the additional CDRX configuration and performs CDRX.

In step 1004, the RAN node 2 transmits dynamic L1/L2 signaling to the UE 1 to deactivate the cell DTX. In step 1005, in response to the dynamic deactivation of the cell DTX, the UE 1 ceases using the additional CDRX configuration and instead performs the CDRX using the normal CDRX configuration.

In step 1006, the RAN node 2 transmits dynamic L1/L2 signaling to the UE 1 to activate the cell DTX. In step 1007, in response to the dynamic activation of the cell DTX, the UE 1 performs the CDRX by applying the additional CDRX configuration instead of the normal CDRX configuration.

The procedure shown in Fig. 10 may be modified as appropriate. For example, step 1002 may be omitted. In other words, the cell DTX may initially be deactivated until it is explicitly activated by dynamic L1/L2 signaling. In this case, in step 1003, in response to the implicit deactivation of the cell DTX, the UE 1 may perform CDRX using the normal CDRX configuration.

The operation of the UE 1 and the RAN node 2 described with reference to Figs. 9 and 10 facilitates switching of CDRX-related configurations between a normal state and a configuration aligned (more appropriately) with the cell DTX pattern, in response to the dynamic activation and deactivation of cell DTX. More specifically, in Figs. 9 and 10, the additional CDRX configuration is sent via an RRC message. Therefore, the operation in Figs. 9 and 10 allows the RAN node 2 to adjust the CDRX pattern more flexibly for use while the cell DTX is activated, compared to an implementation where the additional CDRX configuration is sent via L1 signaling. Additionally, according to the operation shown in Figs. 9 and 10, the UE 1 can switch between the retained normal CDRX configuration and the retained additional CDRX configuration depending on the dynamic activation or deactivation of cell DTX. Therefore, the RAN node 2 does not need to send an updated RRC configuration each time the cell DTX is dynamically activated or deactivated.

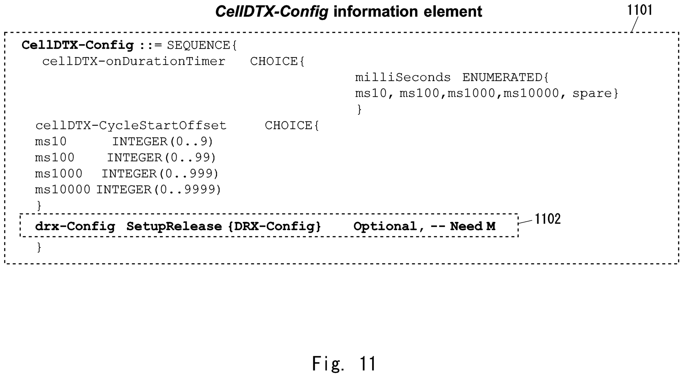

Fig. 11 shows specific examples of the additional CDRX configuration (the second configuration) and the cell DTX configuration (the third configuration). In some implementations, the additional CDRX configuration may be sent in the same RRC message as the cell DTX configuration. In this case, the additional CDRX configuration may be indicated by a sub-information element or field contained within a cell DTX configuration information element. In the example of Fig. 11, a CellDTX-Config information element 1101 indicates a cell DTX configuration. The CellDTX-Config information element 1101 contains a cellDTX-CycleStartOffset information element and a cellDTX-onDurationTimer information element. The cellDTX-onDurationTimer information element indicates the cell DTX ON duration. The cellDTX-CycleStartOffset information element indicates the start offset of the cell DTX cycle. The CellDTX-Config information element 1101 further contains a drx-Config information element 1102. The drx-Config information element 1102 indicates an additional CDRX configuration (the second configuration). The information element format shown in Fig. 11 provides the advantage of facilitating the association between a cell DTX/DRX configuration and its corresponding additional CDRX configuration, even for cases where multiple sets of cell DTX/DRX configurations are to be configured for the UE 1.

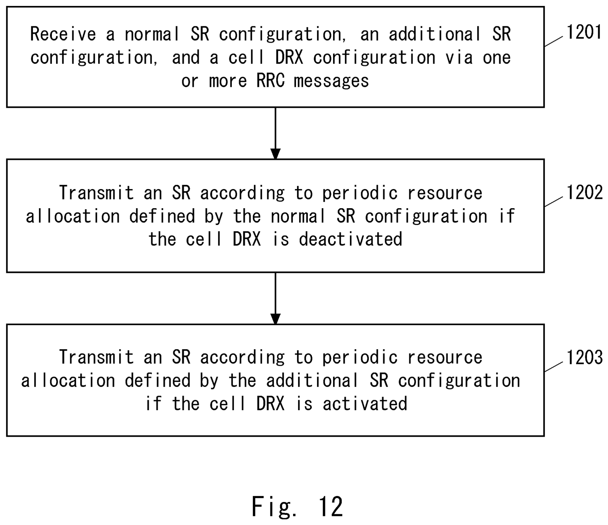

Fig. 12 illustrates another specific example of the operation of the UE 1 described with reference to Fig. 8. Specifically, Fig. 12 is directed toward a case where the first and second configurations are SR configurations and the third configuration is a cell DRX configuration. In step 1201, the UE 1 receives a normal SR configuration, an additional SR configuration, and a cell DRX configuration from the RAN node 2 via one or more RRC messages. The additional SR configuration is provided in addition to the normal SR configuration. Therefore, if the UE 1 receives the additional SR configuration, it maintains the additional SR configuration in addition to the normal SR configuration. In other words, the UE 1 retains or stores both the normal SR configuration and the additional SR configuration. The UE 1 does not overwrite the stored normal SR configuration with the additional SR configuration. The information element containing the additional SR configuration is separate and independent from the information element containing the normal SR configuration. The UE 1 handles these two information elements distinctly.

In steps 1202 and 1203, the UE 1 switches between the normal SR configuration and the additional SR configuration depending on whether cell DRX is activated or deactivated. The order of steps 1202 and 1203, as shown in Fig 12, is for illustrative purposes only and does not have to be followed in this order. In step 1202, while the cell DRX is deactivated, the UE 1 transmits an SR according to the periodic resource allocation defined by the normal SR configuration. In other words, if or in cases where the cell DRX is deactivated, the UE 1 applies the normal SR configuration. In contrast, in step 1203, while the cell DRX is activated, the UE 1 transmits an SR according to the periodic resource allocation defined by the additional SR configuration. In other words, if or in cases where the cell DRX is activated, the UE 1 applies the additional SR configuration.

The operation shown in Fig. 10 is similarly applicable to cases where the first and second configurations are SR configurations and the third configuration is a cell DRX configuration. The information element format shown in Fig. 11 is similarly applicable to cases where the first and second configurations are SR configurations and the third configuration is a cell DRX configuration. Furthermore, the operation of the UE 1 and RAN node 2, as well as the information element format, described with reference to Figs. 10 to 12, are similarly applicable to cases where the first and second configurations are SPS configurations, CG configurations, SRS configurations, or PRACH configurations.

### Second Example Embodiment

An example configuration of a radio communication system according to the present example embodiment is the same as the example configuration described with reference to Fig. 1. This example embodiment provides details on switching of UE CDRX patterns in response to the dynamic activation and deactivation of cell DTX.

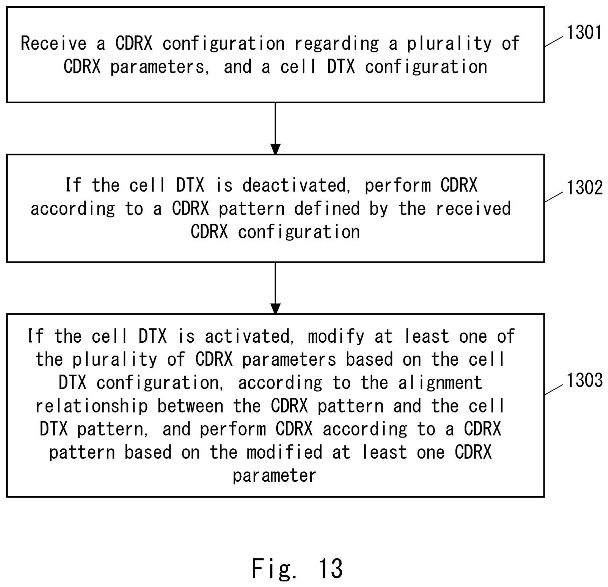

Fig 13 shows an example of the operation of the UE 1. In step 1301, the UE 1 receives a CDRX configuration regarding a plurality of CDRX parameters and a cell DTX configuration. The plurality of CDRX parameters may include the length of the CDRX cycle (e.g., drx-LongCycle), the length of the ON duration within the CDRX cycle (e.g., drx-onDurationTimer), and the start offset of the CDRX cycle (e.g., drx-StartOffset). The UE 1 may receive these configurations from the RAN node 2 via one or more RRC messages. The one or more RRC messages may be at least one cell-specific (or cell-common) RRC message, at least one UE-specific RRC message, or a combination thereof. The cell-specific RRC message may be system information (e.g., a SIB1 message). The UE-specific RRC message may be an RRC Reconfiguration message.

In steps 1302 and 1303, the UE 1 autonomously modifies or adjusts the cell DTX pattern based on whether the cell DTX based on the received cell DTX configuration is activated or deactivated. The order of steps 1302 and 1303, as shown in Fig. 13, is for illustrative purposes only and does not have to be followed in this order. As mentioned above, cell DTX may be activated and deactivated dynamically via L1/L2 signaling. Dynamic L1/L2 signaling may be UE-specific or UE group-specific.

In step 1302, while the cell DTX is deactivated, the UE 1 performs CDRX by applying the CDRX configuration received in step 1301. In other words, if or in cases where the cell DTX is deactivated, the UE 1 applies the received CDRX configuration.

In contrast, in step 1303, if the cell DTX is activated, the UE 1 autonomously adjusts the CDRX pattern according to the placement or alignment relationship between the CDRX pattern and the cell DTX pattern. Specifically, the UE 1 changes at least one of the plurality of CDRX parameters based on the cell DTX configuration, according to the placement or alignment relationship between the CDRX pattern and the cell DTX pattern. Then, the UE 1 performs CDRX according to the adjusted CDRX pattern based on the at least one changed CDRX parameter. In other words, the UE 1 adjusts the CDRX pattern by changing at least one of the plurality of CDRX parameters based on the cell DTX configuration, and performs CDRX according to the adjusted CDRX pattern. That is, the UE 1 determines whether it needs to change or adjust the CDRX pattern (or at least one CDRX parameter) based on or considering the placement or alignment relationship between periodic resource allocation and the cell DTX pattern.

For example, the UE 1 may modify a CDRX parameter received from the RAN node 2, such as the length of the CDRX cycle, the length of the CDRX ON duration, or the start offset, only if the normal CDRX pattern does not align with the cell DTX pattern. For example, as shown for UE-C and UE-D in Fig. 7, the UE 1 may modify a CDRX parameter received from the RAN node 2 only if the normal CDRX pattern is not aligned with the cell DTX pattern. Conversely, if the normal CDRX pattern is (sufficiently) aligned with the cell DTX pattern, as shown for UE-A and UE-B in Fig. 7, the UE 1 may not need to modify or adjust the CDRX parameters received from the RAN node 2.

In step 1303, UE 1 may adjust the CDRX pattern as follows. In the first example, if the CDRX cycle length is greater than the cell DTX cycle length, the UE 1 changes or adjusts the CDRX cycle length so that the CDRX cycle length is equal to or shorter than the cell DTX cycle length. Otherwise, the UE 1 does not adjust the CDRX cycle.

In the second example, if the ON duration within the CDRX cycle is not fully overlapped by the ON duration within the cell DTX cycle, the UE 1 reduces the start offset of the CDRX cycle used while the cell DTX is activated, making the end of the CDRX ON duration coincide with or precede the end of the cell DTX ON duration. Otherwise, the UE 1 does not adjust the CDRX cycle. The second example may be used in conjunction with the first example.

In addition to or instead of performing step 1303, the UE 1 may operate as follows. If the CDRX ON duration is longer than the cell DTX ON duration, the UE 1 may disable the CDRX and follow the cell DTX configuration.

The operation of the UE 1 described with reference to Fig. 13 enables the UE 1 to autonomously switch its CDRX-related configuration between a normal configuration and a configuration aligned (more appropriately) with the cell DTX pattern, depending on the dynamic activation and deactivation of the cell DTX. Specifically, according to the operation shown in Fig 13, the UE 1 modifies a CDRX parameter received from the RAN node 2, such as the length of the CDRX cycle, the length of the CDRX ON duration, or the start offset, only if the normal CDRX pattern is not aligned with the cell DTX pattern. The operation of the UE 1 in Fig. 13 may be preferable from the perspective of UE energy savings compared to an implementation where all UEs in the cell use common CDRX parameters with the same values as the corresponding cell DTX/DRX parameters, regardless of whether each UE's normal CDRX pattern is sufficiently aligned with the cell DTX pattern. Additionally, the operation shown in Fig. 13 modifies at least one of the multiple CDRX parameters, enabling more flexible alignment compared to the method of masking a CDRX configuration with a cell DTX configuration.

### Third Example Embodiment

An example configuration of a radio communication system according to the present example embodiment is the same as the example configuration described with reference to Fig. 1. This example embodiment provides details on switching of configurations for downlink reception or uplink transmission in response to the dynamic activation and deactivation of cell DTX/DRX.

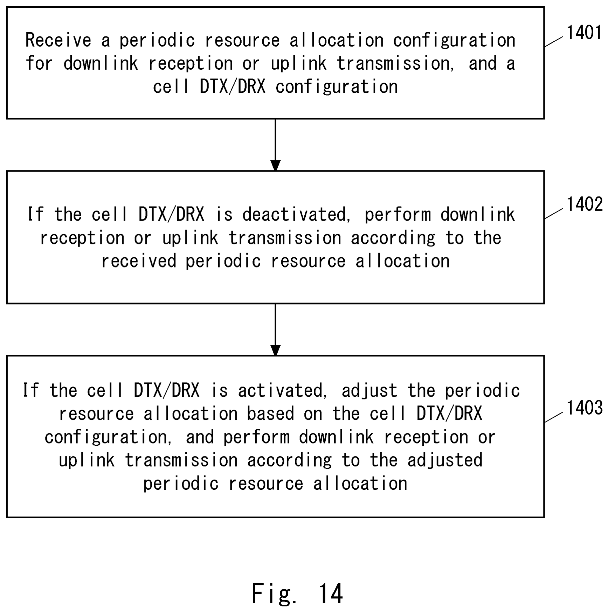

Fig 14 shows an example of the operation of the UE 1. In step 1401, the UE 1 receives a periodic resource allocation configuration for downlink reception or uplink transmission, and a cell DTX/DRX configuration. Specifically, the UE 1 may receive these configurations from the RAN node 2 via one or more RRC messages. The one or more RRC messages may be at least one cell-specific (or cell-common) RRC message, at least one UE-specific RRC message, or a combination thereof. The cell-specific RRC message may be system information (e.g., a SIB1 message). The UE-specific RRC message may be an RRC Reconfiguration message.

The periodic resource allocation configuration may relate to downlink reception. Specifically, the configuration may contain a configuration (e.g., SPS-Config) relating to periodic resource allocation for transmitting a downlink physical channel (e.g., PDSCH) carrying downlink data. In other words, the periodic resource allocation configuration may contain or relate to a Semi-Persistent Scheduling (SPS) configuration.

The periodic resource allocation configuration may relate to uplink transmission. Specifically, the configuration may contain a configuration (e.g., SchedulingRequestResourceConfig) regarding uplink resources to be used for Scheduling Request (SR) transmission. Additionally or alternatively, the periodic resource allocation configuration may contain a configuration (e.g., ConfiguredGrantConfig) regarding periodic resource allocation for transmitting an uplink physical channel (e.g., PUSCH) carrying uplink data. In other words, the periodic resource allocation configuration may be or relate to a Configured Grant (CG) configuration. Additionally or alternatively, the periodic resource allocation configuration may contain a configuration regarding uplink resources to be used for transmitting an uplink reference signal. The uplink reference signal may be a Sounding Reference Signal (SRS).

In steps 1402 and 1403, the UE 1 autonomously modifies or adjusts the periodic resource allocation configuration based on whether the cell DTX/DRX based on the received cell DTX/DRX configuration is activated or deactivated. The order of steps 1402 and 1403, as shown in Fig. 14, is for illustrative purposes only and does not have to be followed in this order. As described above, cell DTX/DRX may be activated and deactivated dynamically via L1/L2 signaling. Dynamic L1/L2 signaling may be UE-specific or UE group-specific.

In step 1402, while the cell DTX is deactivated, the UE 1 performs downlink reception according to the periodic resource allocation received in step 1401. Additionally or alternatively, while the cell DRX is deactivated, the UE 1 performs uplink transmission according to the periodic resource allocation received in step 1401. In other words, if or in cases where the cell DTX/DRX is deactivated, the UE 1 applies the received periodic resource allocation.

In contrast, in step 1403, while the cell DTX/DRX is activated, the UE 1 autonomously modifies or adjusts the periodic resource allocation based on the cell DTX/DRX configuration. The UE 1 then performs downlink reception or uplink transmission according to the modified or adjusted periodic resource allocation. If the periodic resource allocation received in step 1401 is not (sufficiently) aligned with the cell DTX/DRX pattern, the UE 1 may adjust the periodic resource allocation based on the cell DTX/DRX configuration. In other words, the UE 1 may only modify or adjust the periodic resource allocation if the periodic resource allocation received from the RAN node 2 is not (sufficiently) aligned with the cell DTX/DRX pattern. In other words, the UE 1 may determine whether it needs to modify the periodic resource allocation based on or considering the placement or alignment relationship between the periodic resource allocation and the cell DTX pattern.

In step 1403, the UE 1 may adjust the periodic resource allocation as follows. The UE 1 may adjust the periodic resource allocation used while the cell DTX/DRX is activated so that the periodic resources for downlink reception or uplink transmission are contained within the on-duration of the cell DTX/DRX cycle. In other words, the UE 1 may modify one or more parameters defining the periodic resource allocation, ensuring that more periodic resources for downlink reception or uplink transmission fall within the ON duration of the cell DTX/DRX.

Consider a case where the periodic resource allocation configuration is an SPS configuration for downlink physical channel (e.g., PDSCH) transmission. In the first example, if the periodicity of the SPS resource allocation is shorter than the cell DTX cycle length, the UE 1 may modify or adjust the periodicity of the SPS resource allocation so that it equals the length of the cell DTX cycle. Otherwise, the UE 1 may not need to adjust the periodicity of the SPS resource allocation. In the second example, the UE 1 may consider the first slot or the last slot within the cell DTX ON duration as the starting point for the SPS resource allocation. The second example may be used in conjunction with the first example. The periodicity of the SPS resource allocation is defined by the "periodicity" or "periodicityExt" field in an "SPS-Config information" element received from the RAN node 2, for example.

Consider a case where the periodic resource allocation configuration defines periodic uplink resources to be used for SR transmission. In the first example, if the periodicity of the SR resource allocation is smaller than the length of the cell DRX cycle, the UE 1 may modify or adjust the periodicity of the SR resource allocation so that it equals the length of the cell DRX cycle. Otherwise, the UE 1 may not need to adjust the periodicity of the SR resource allocation. In the second example, if the periodic SR resources are not fully overlapped by the ON duration within the cell DRX cycle, the UE 1 may modify or adjust the offset of the SR resources so that the end of the SR resources coincides with or precedes the end of the cell DRX ON duration. The second example may be used in conjunction with the first example. The periodicity and offset of the SR resource allocation are defined by the "periodicityAndOffset" field in a "SchedulingRequestResourceConfig" information element received from the RAN node 2, for example.

Consider a case where the periodic resource allocation configuration is a CG configuration for uplink physical channel (e.g., PUSCH) transmission. In the first example, if the periodicity of the CG resource allocation is shorter than the length of the cell DRX cycle, the UE 1 may modify or adjust the periodicity of the CG resource allocation so that it equals the length of the cell DRX cycle. Otherwise, the UE 1 may not need to adjust the periodicity of the CG resource allocation. In the second example, the UE 1 may consider the first slot or the last slot within the cell DRX duration as the starting point for the CG resource allocation. The second example may be used in conjunction with the first example. The periodicity of the CG resource allocation is defined by the "periodicity" or "periodicityExt" field in a "ConfiguredGrantConfig" information element received from the RAN node 2, for example.

Consider a case where the periodic resource allocation configuration is an SRS configuration that defines SRS transmission resources. In the first example, if the periodicity of the SRS resource allocation is smaller than the length of the cell DRX cycle, the UE 1 may modify or adjust the periodicity of the SRS resource allocation so that it is equal to the length of the cell DRX cycle. Otherwise, the UE 1 may not need to adjust the periodicity of the SRS resource allocation. In the second example, if the periodic SRS resources are not fully overlapped by the ON duration within the cell DRX cycle, the UE 1 may modify or adjust the offset of the SRS resources so that the end of the SRS resources coincides with or precedes the end of the cell DRX ON duration. The second example may be used in conjunction with the first example. The periodicity and offset of the SRS resource allocation are defined by the "SRS-PeriodicityAndOffset" field in an "SRS-Config information" element received from RAN node 2, for example.

The operation of the UE 1 described with reference to Fig. 14 allows the UE 1 to autonomously switch its periodic resource allocation configurations for downlink reception or uplink transmission between a normal configuration and a configuration aligned (more appropriately) with the cell DTX/DRX pattern, depending on the dynamic activation and deactivation of the cell DTX/DRX.

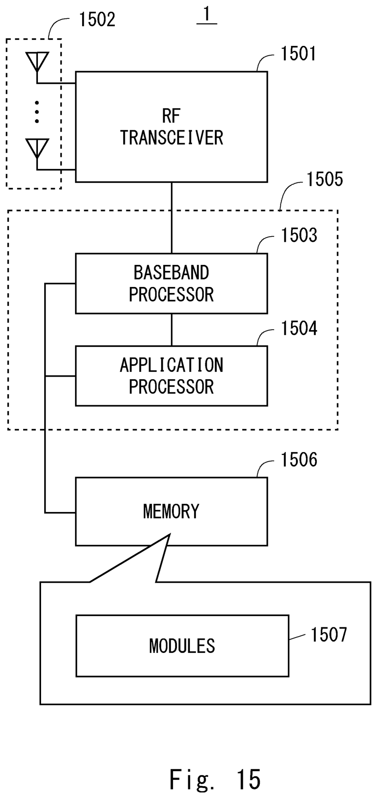

The following describes example configurations of the UE 1 and the RAN node 2 related to the multiple example embodiments described above. Fig. 15 shows a block diagram of an example configuration of the UE 1. The Radio Frequency (RF) transceiver 1501 performs analog RF signal processing to communicate with the RAN node 2. The RF transceiver 1501 may include a plurality of transceivers. The analog RF signal processing performed by the RF transceiver 1501 includes frequency up-conversion, frequency down-conversion, and amplification. The RF transceiver 1501 is coupled with an antenna array 1502 and a baseband processor 1503. The RF transceiver 1501 receives modulated symbol data (or OFDM symbol data) from the baseband processor 1503, generates a transmission RF signal, and supplies the transmission RF signal to the antenna array 1502. The RF transceiver 1501 also generates a baseband received signal based on a received RF signal received by the antenna array 1502, and supplies the baseband received signal to the baseband processor 1503. The RF transceiver 1501 may include an analog beamformer circuit for beamforming. The analog beamformer circuit includes, for example, multiple phase shifters and multiple power amplifiers.

The baseband processor 1503 performs digital baseband signal processing (data-plane processing) and control-plane processing for radio communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 1503 may include signal processing for the Service Data Adaptation Protocol (SDAP) layer, the Packet Data Convergence Protocol (PDCP) layer, the Radio Link Control (RLC) layer, the Medium Access Control (MAC) layer, and the Physical (PHY) layer. The control plane processing performed by the baseband processor 1503 may include processing of the Non-Access Stratum (NAS) protocol, the Radio Resource Control (RRC) protocol, MAC Control Elements (CEs), and Downlink Control Information (DCIs).

The baseband processor 1503 may perform Multiple Input Multiple Output (MIMO) encoding and precoding for beamforming.

The baseband processor 1503 may include a modem processor (e.g., a digital signal processor (DSP)) that performs digital baseband signal processing and a protocol stack processor (e.g., a central processing unit (CPU) or a micro processing unit (MPU)) that performs control plane processing. In this case, the protocol stack processor that performs control plane processing may be integrated with an application processor 1504 described later.

The application processor 1504 is also referred to as a CPU, MPU, microprocessor, or processor core. The application processor 1504 may include a plurality of processors (a plurality of processor cores). The application processor 1504 executes a system software program (operating system (OS)) and various application programs (e.g., call application, web browser, mailer, camera operation application, music player application) read from a memory 1506 or from another memory, thereby realizing various functions of the UE 1.

In some implementations, as shown by the dashed line (1505) in Fig. 15, the baseband processor 1503 and the application processor 1504 may be integrated on a single chip. In other words, the baseband processor 1503 and the application processor 1504 may be implemented as a single System on Chip (SoC) device 1505. The SoC device may also be referred to as a system large-scale integration (LSI) or chipset.

The memory 1506 is a volatile memory or a non-volatile memory or a combination thereof. The memory 1506 may include a plurality of physically independent memory devices. The volatile memory is, for example, Static Random Access Memory (SRAM), Dynamic RAM (DRAM), or a combination thereof. The non-volatile memory is, for example, Mask Read Only Memory (MROM), Electrically Erasable Programmable ROM (EEPROM), flash memory, or a hard disk drive, or any combination thereof. For example, the memory 1506 may include an external memory device that is accessible by the baseband processor 1503, the application processor 1504, and the SoC 1505. The memory 1506 may include an internal memory device that is integrated into the baseband processor 1503, the application processor 1504, or the SoC 1505. In addition, the memory 1506 may include memory within a Universal Integrated Circuit Card (UICC).

The memory 1506 may store one or more software modules (or computer programs) 1507 that include a set of instructions and data for performing the processing by the UE 1. In some implementations, the baseband processor 1503 or the application processor 1504 may be configured to read and execute the software modules 1507 from the memory 1506, thereby performing the processing of the UE 1 as described in one or more of the example embodiments.

The control plane processing and operations performed by the UE 1 described in the above example embodiment can be implemented by elements other than the RF transceiver 1501 and the antenna array 1502, namely at least one of the baseband processor 1503 and the application processor 1504, and the memory 1506 that stores the software modules 1507.

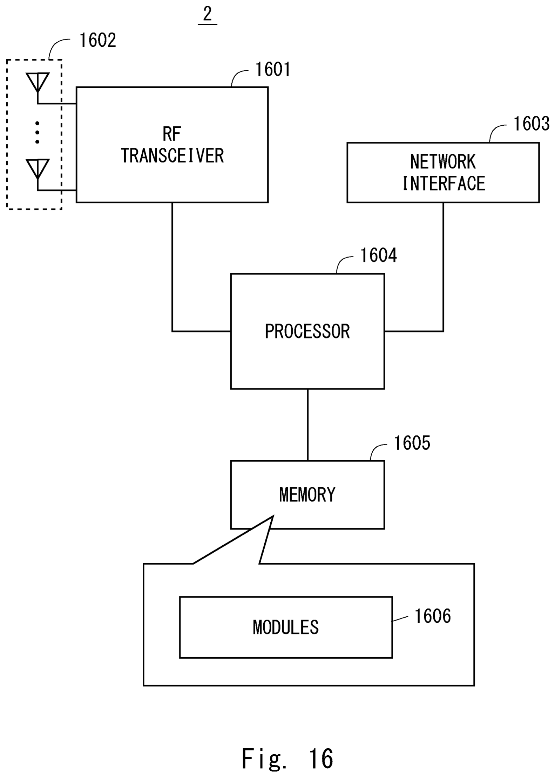

Fig. 16 is a block diagram showing an example of the configuration of the RAN node 2. Referring to Fig. 16, the RAN node 2 includes a Radio Frequency (RF) transceiver 1601, a network interface 1603, a processor 1604, and a memory 1605. The RF transceiver 1601 performs analog RF signal processing to communicate with the UEs 1. The RF transceiver 1601 may include a plurality of transceivers. The RF transceiver 1601 is coupled to an antenna array 1602 and the processor 1604. The RF transceiver 1601 receives modulated symbol data from the processor 1604, generates a transmission RF signal, and supplies the transmission RF signal to the antenna array 1602. The RF transceiver 1601 generates a baseband reception signal based on a reception RF signal received by the antenna array 1602 and supplies the baseband reception signal to the processor 1604. The RF transceiver 1601 may include an analog beamformer circuit for beamforming. The analog beamformer circuit includes, for example, a plurality of phase shifters and a plurality of power amplifiers.

The network interface 1603 is used to communicate with network nodes (e.g., other RAN nodes, as well as control nodes and transfer nodes in the core network). For example, the network interface 1603 may include a network interface card (NIC) conforming to the IEEE 802.3 series.

The processor 1604 performs digital baseband signal processing (data plane processing) and control plane processing for radio communication. The processor 1604 may include a plurality of processors. For example, the processor 1604 may include a modem processor (e.g., a digital signal processor (DSP)) that performs digital baseband signal processing and a protocol stack processor (e.g., a central processing unit (CPU) or a micro processing unit (MPU)) that performs control plane processing. The processor 1604 may include a digital beamformer module for beamforming. The digital beamformer module may include a Multiple Input Multiple Output (MIMO) encoder and precoder.

The memory 1605 is composed of a combination of a volatile memory and a non-volatile memory. The volatile memory is, for example, Static Random Access Memory (SRAM) or Dynamic RAM (DRAM) or a combination thereof. The non-volatile memory is Mask Read Only Memory (MROM), Electrically Erasable Programmable ROM (EEPROM), flash memory, or a hard disk drive, or any combination thereof. The memory 1605 may include storage located separate from the processor 1604. In this case, the processor 1604 may access the memory 1605 via a network interface 1603 or another I/O interface.

The memory 1605 may store one or more software modules (computer programs) 1606 containing instructions and data for performing the processing by the RAN node 2. In some implementations, the processor 1604 may be configured to execute the software modules 1606 read from the memory 1605, thereby performing the processing of the RAN node 2 described in one or more of the example embodiments.

In a case where the RAN node 2 is a CU (e.g., gNB-CU) or a CU-CP (e.g., gNB-CU-CP), the RAN node 2 may not include the RF transceiver 1601 (and the antenna array 1602).

As explained using Figs. 15 and 16, each of the processors of the UE 1 and RAN node 2 in the above example embodiments can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Bluray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The above example embodiments are merely examples of the application of the technical concepts obtained by the inventors. These technical concepts are not limited to the above example embodiments and may be modified in various ways.

For example, the whole or part of the example embodiments disclosed above can be described as, but not limited to, the following supplementary notes. Of course, some or all of the elements (e.g., configurations and functionality) described in the Supplementary Notes directed to a device (e.g., radio terminal, radio access network node) may also be described as or in Supplementary Notes directed to methods and programs. For example, some or all of the elements listed in Supplementary Notes 2-15 that depend on Supplementary Note 1 may also be listed as Supplementary Notes that depend on Supplementary Note 31 or 33 with the same dependency as Supplementary Notes 2-15. Similarly, some or all of the elements listed in Supplementary Notes 17-30 that depend on Supplementary Note 16 may also be listed as Supplementary Notes that depend on Supplementary Note 32 or 34 with the same dependency as Supplementary Notes 17-30. Some or all of the elements described in a Supplementary Note may be applicable to various hardware, software, storage for storing software, systems, and methods.

### (Supplementary Note 1)

A radio terminal comprising:
means for receiving, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX); and
means for using the first configuration for the downlink reception or uplink transmission while the cell DTX or cell DRX based on the third configuration is deactivated, and for using the second configuration for the downlink reception or uplink transmission while the cell DTX or cell DRX based on the third configuration is activated.

### (Supplementary Note 2)

The radio terminal according to Supplementary Note 1, wherein the means for using is adapted to switch between the first configuration and the second configuration to be used for the downlink reception or the uplink transmission, depending on whether the cell DTX or cell DRX based on the third configuration is activated or deactivated.

### (Supplementary Note 3)

The radio terminal according to Supplementary Note 1 or 2, further comprising means for maintaining the second configuration in addition to the first configuration.

### (Supplementary Note 4)

The radio terminal according to any one of Supplementary Notes 1 to 3, further comprising means for receiving Layer 1 or Layer 2 signaling to deactivate or activate the cell DTX or cell DRX based on the third configuration.

### (Supplementary Note 5)

The radio terminal according to any one of Supplementary Notes 1 to 4, wherein the first configuration and the second configuration each define periodic opportunities or resources where the downlink reception or uplink transmission is performed.

### (Supplementary Note 6)

The radio terminal according to any one of Supplementary Notes 1 to 5, further comprising means for using the first configuration for the downlink reception or uplink transmission if the first configuration is received but the second configuration is not received, regardless of whether the cell DTX or cell DRX based on the third configuration is activated or deactivated.

### (Supplementary Note 7)

The radio terminal according to any one of Supplementary Notes 1 to 6, wherein
the means for receiving is adapted to receive the second configuration via a same RRC message as the third configuration,
the third configuration is indicated by a cell DTX or cell DRX configuration information element contained in a serving cell configuration information element within the RRC message, and
the second configuration is indicated by a sub-information element contained in the cell DTX or cell DRX configuration information element.

### (Supplementary Note 8)

The radio terminal according to any one of Supplementary Notes 1 to 7, wherein
the third configuration includes a plurality of cell DTX or cell DRX configurations,
the second configuration includes a plurality of configurations, each associated with a respective one of the plurality of cell DTX or cell DRX configurations, and
the means for using is adapted to use one of the plurality of configurations corresponding to an activated one of the plurality of cell DTX or cell DRX configurations while the cell DTX or cell DRX is deactivated.

### (Supplementary Note 9)

The radio terminal according to any one of Supplementary Notes 1 to 8, wherein
the first configuration and the second configuration each contain a configuration related to a connected mode discontinuous reception (CDRX) pattern, and
the third configuration contains a configuration related to a cell DTX pattern.

### (Supplementary Note 10)

The radio terminal according to Supplementary Note 9, wherein
the first configuration is a drx-Config information element, and
the second configuration is an additional drx-Config information element distinct from the drx-Config information element.

### (Supplementary Note 11)

The radio terminal according to any one of Supplementary Notes 1 to 8, wherein
the first configuration and the second configuration each contain a configuration related to an uplink resource to be used for transmitting a Scheduling Request (SR), and
the third configuration contains a configuration related to a cell DRX pattern.

### (Supplementary Note 12)

The radio terminal according to any one of Supplementary Notes 1 to 8, wherein
the first configuration and the second configuration each contain a configuration related to periodic resource allocation for transmitting an uplink physical channel carrying uplink data, and
the third configuration contains a configuration related to a cell DRX pattern.

### (Supplementary Note 13)

The radio terminal according to any one of Supplementary Notes 1 to 8, wherein
the first configuration and the second configuration each contain a configuration related to periodic resource allocation for transmitting a downlink physical channel carrying downlink data, and
the third configuration contains a configuration related to a cell DTX pattern.

### (Supplementary Note 14)

The radio terminal according to any one of Supplementary Notes 1 to 8, wherein
the first configuration and the second configuration each contain a configuration related to an uplink resource to be used for transmitting an uplink reference signal, and
the third configuration contains a configuration related to a cell DRX pattern.

### (Supplementary Note 15)

The radio terminal according to any one of Supplementary Notes 1 to 8, wherein
the first configuration and the second configuration each contain a configuration related to an uplink resource to be used for transmitting a physical random access channel, and
the third configuration contains a configuration related to a cell DRX pattern.

### (Supplementary Note 16)

A radio access network node comprising:
means for transmitting to a radio terminal, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX),
wherein the first configuration is used by the radio terminal while the cell DTX or cell DRX based on the third configuration is deactivated, and
wherein the second configuration is used by the radio terminal while the cell DTX or cell DRX based on the third configuration is activated.

### (Supplementary Note 17)

The radio access network node according to Supplementary Note16, wherein the first configuration and the second configuration cause the radio terminal to switch between the first configuration and the second configuration to be used for the downlink reception or the uplink transmission, depending on whether the cell DTX or cell DRX based on the third configuration is activated or deactivated.

### (Supplementary Note 18)

The radio access network node according to Supplementary Note16 or 17, wherein the second configuration is maintained by the radio terminal in addition to the first configuration.

### (Supplementary Note 19)

The radio access network node according to any one of Supplementary Notes 16 to 18, further comprising means for transmitting Layer 1 or Layer 2 signaling to deactivate or activate the cell DTX or cell DRX based on the third configuration.

### (Supplementary Note 20)

The radio access network node according to any one of Supplementary Notes 16 to 19, wherein the first configuration and the second configuration each define periodic opportunities or resources where the downlink reception or uplink transmission is performed.

### (Supplementary Note 21)

The radio access network node according to any one of Supplementary Notes 16 to 20, wherein the first configuration causes the radio terminal to use the first configuration for the downlink reception or uplink transmission if the first configuration is received but the second configuration is not received, regardless of whether the cell DTX or cell DRX based on the third configuration is activated or deactivated.

### (Supplementary Note 22)

The radio access network node according to any one of Supplementary Notes 16 to 21, wherein
the means for transmitting is adapted to transmit the second configuration via a same RRC message as the third configuration,
the third configuration is indicated by a cell DTX or cell DRX configuration information element contained in a serving cell configuration information element within the RRC message, and
the second configuration is indicated by a sub-information element contained in the cell DTX or cell DRX configuration information element.

### (Supplementary Note 23)

The radio access network node according to any one of Supplementary Notes 16 to 22, wherein
the third configuration includes a plurality of cell DTX or cell DRX configurations,
the second configuration includes a plurality of configurations, each associated with a respective one of the plurality of cell DTX or cell DRX configurations, and
the plurality of configurations cause the radio terminal to use one of the plurality of configurations corresponding to an activated one of the plurality of cell DTX or cell DRX configurations while the cell DTX or cell DRX is deactivated.

### (Supplementary Note 24)

The radio access network node according to any one of Supplementary Notes 16 to 23, wherein
the first configuration and the second configuration each contain a configuration related to a connected mode discontinuous reception (CDRX) pattern, and
the third configuration contains a configuration related to a cell DTX pattern.

### (Supplementary Note 25)

The radio access network node according to Supplementary Note 24, wherein
the first configuration is a drx-Config information element, and
the second configuration is an additional drx-Config information element distinct from the drx-Config information element.

### (Supplementary Note 26)

The radio access network node according to any one of Supplementary Notes 16 to 25, wherein
the first configuration and the second configuration each contain a configuration related to an uplink resource to be used for transmitting a Scheduling Request (SR), and
the third configuration contains a configuration related to a cell DRX pattern.

### (Supplementary Note 27)

The radio access network node according to any one of Supplementary Notes 16 to 26, wherein
the first configuration and the second configuration each contain a configuration related to periodic resource allocation for transmitting an uplink physical channel carrying uplink data, and
the third configuration contains a configuration related to a cell DRX pattern.

### (Supplementary Note 28)

The radio access network node according to any one of Supplementary Notes 16 to 27, wherein
the first configuration and the second configuration each contain a configuration related to periodic resource allocation for transmitting a downlink physical channel carrying downlink data, and
the third configuration contains a configuration related to a cell DTX pattern.

### (Supplementary Note 29)

The radio access network node according to any one of Supplementary Notes 16 to 28, wherein
the first configuration and the second configuration each contain a configuration related to an uplink resource to be used for transmitting an uplink reference signal, and
the third configuration contains a configuration related to a cell DRX pattern.

### (Supplementary Note 30)

The radio access network node according to any one of Supplementary Notes 16 to 29, wherein
the first configuration and the second configuration each contain a configuration related to an uplink resource to be used for transmitting a physical random access channel, and
the third configuration contains a configuration related to a cell DRX pattern.

### (Supplementary Note 31)

A method performed by a radio terminal, comprising:
receiving, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX); and
using the first configuration for the downlink reception or uplink transmission while the cell DTX or cell DRX based on the third configuration is deactivated, and for using the second configuration for the downlink reception or uplink transmission while the cell DTX or cell DRX based on the third configuration is activated.

### (Supplementary Note 32)

A method performed by a radio access network node, comprising:
transmitting to a radio terminal, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX),
wherein the first configuration is used by the radio terminal while the cell DTX or cell DRX based on the third configuration is deactivated, and
wherein the second configuration is used by the radio terminal while the cell DTX or cell DRX based on the third configuration is activated.

### (Supplementary Note 33)

A program for causing a computer to perform a method for a radio terminal, the method comprising:
receiving, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX); and
using the first configuration for the downlink reception or uplink transmission while the cell DTX or cell DRX based on the third configuration is deactivated, and for using the second configuration for the downlink reception or uplink transmission while the cell DTX or cell DRX based on the third configuration is activated.

### (Supplementary Note 34)

A program for causing a computer to perform a method for a radio access network node,
the method comprising transmitting to a radio terminal, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX),
wherein the first configuration is used by the radio terminal while the cell DTX or cell DRX based on the third configuration is deactivated, and
wherein the second configuration is used by the radio terminal while the cell DTX or cell DRX based on the third configuration is activated.

### (Supplementary Note 35)

A radio terminal comprising:
means for receiving a first configuration related to a plurality of connected mode discontinuous reception (CDRX) parameters, and a second configuration related to cell discontinuous transmission (DTX); and
means for performing CDRX,
wherein the means for performing is adapted to:
   if the cell DTX based on the second configuration is deactivated, perform CDRX according to a CDRX pattern defined by the first configuration; and
   if the cell DTX based on the second configuration is activated, modify at least one of the plurality of CDRX parameters, based on the second configuration related to the cell DTX, depending on an alignment relationship between a CDRX pattern defined by the first configuration and a cell DTX pattern defined by the second configuration, and perform CDRX according to a CDRX pattern based on the modified at least one CDRX parameter.

### (Supplementary Note 36)

The radio terminal according to Supplementary Note 35, wherein the plurality of CDRX parameters include a length of a CDRX cycle, a length of an ON duration in the CDRX cycle, and a start offset of the CDRX cycle.

### (Supplementary Note 37)

The radio terminal according to Supplementary Note 36, wherein the means for performing is adapted to, if the length of the CDRX cycle defined by the first configuration is greater than a length of a cell DTX cycle defined by the second configuration, adjust the length of the CDRX cycle used while the cell DTX is activated, making the length of the CDRX cycle equal to or shorter than the length of the cell DTX cycle.

### (Supplementary Note 38)

The radio terminal according to Supplementary Note 36 or 37, wherein the means for performing is adapted to, if the ON duration within the CDRX cycle defined by the first configuration is not fully overlapped by an ON duration within a cell DTX cycle defined by the second configuration, reduce the start offset of the CDRX cycle used while the cell DTX is activated, making an end of the ON duration within the CDRX cycle coincide with or precede an end of the ON duration within the cell DTX cycle.

### (Supplementary Note 39)

A method performed by a radio terminal, comprising:
receiving a first configuration related to a plurality of connected mode discontinuous reception (CDRX) parameters, and a second configuration related to cell discontinuous transmission (DTX); and
performing CDRX,
wherein the performing comprises:
   if the cell DTX based on the second configuration is deactivated, performing CDRX according to a CDRX pattern defined by the first configuration; and
   if the cell DTX based on the second configuration is activated, modifying at least one of the plurality of CDRX parameters, based on the second configuration related to the cell DTX, depending on an alignment relationship between a CDRX pattern defined by the first configuration and a cell DTX pattern defined by the second configuration, and performing CDRX according to a CDRX pattern based on the modified at least one CDRX parameter.

### (Supplementary Note 40)

A program for causing a computer to perform a method for a radio terminal, the method comprising:
receiving a first configuration related to a plurality of connected mode discontinuous reception (CDRX) parameters, and a second configuration related to cell discontinuous transmission (DTX); and
performing CDRX,
wherein the performing comprises:
   if the cell DTX based on the second configuration is deactivated, performing CDRX according to a CDRX pattern defined by the first configuration; and
   if the cell DTX based on the second configuration is activated, modifying at least one of the plurality of CDRX parameters, based on the second configuration related to the cell DTX, depending on an alignment relationship between a CDRX pattern defined by the first configuration and a cell DTX pattern defined by the second configuration, and performing CDRX according to a CDRX pattern based on the modified at least one CDRX parameter.

### (Supplementary Note 41)

A radio terminal comprising:
means for receiving a first configuration indicating periodic resource allocation for downlink reception or uplink transmission, and a second configuration related to cell discontinuous transmission (DTX) or cell discontinuous reception (DRX); and
means for performing the downlink reception or uplink transmission,
wherein the means for performing is adapted to:
   if the cell DTX or cell DRX based on the second configuration is deactivated, perform the downlink reception or uplink transmission according to the periodic resource allocation defined by the first configuration; and
   if the cell DTX or cell DRX based on the second configuration is activated, adjust the periodic resource allocation based on the second configuration related to the cell DTX or cell DRX, and perform the downlink reception or uplink transmission according to the adjusted periodic resource allocation.

### (Supplementary Note 42)

The radio terminal according to Supplementary Note 41, wherein the means for performing is adapted to adjust the periodic resource allocation based on the second configuration related to the cell DTX or cell DRX, if the cell DTX or cell DRX based on the second configuration is activated, and if the periodic resource allocation defined by the first configuration is not aligned with a cell DTX pattern defined by the second configuration.

### (Supplementary Note 43)

The radio terminal according to Supplementary Note 41 or 42, wherein the means for performing is adapted to adjust the periodic resource allocation used while the cell DTX or cell DRX is activated, ensuring that more periodic resources for the downlink reception or uplink transmission fall within an ON duration within a cell DTX or cell DRX cycle.

### (Supplementary Note 44)

The radio terminal according to any one of Supplementary Notes 41 to 43, wherein
the first configuration contains a configuration for periodic resource allocation for Scheduling Request (SR) transmission, and
the second configuration contains a configuration related to a cell DRX pattern.

### (Supplementary Note 45)

The radio terminal according to Supplementary Note 44, wherein the means for performing is adapted to, if a periodicity of the periodic resource allocation defined by the first configuration is smaller than a length of a cell DRX cycle defined by the second configuration, adjust the periodicity used while the cell DRX is activated so that the periodicity becomes equal to the length of the cell DRX cycle.

### (Supplementary Note 46)

The radio terminal according to Supplementary Note 44 or 45, wherein the means for performing is adapted to, if a periodic resource defined by the first configuration are not fully overlapped by an ON duration within a cell DRX cycle defined by the second configuration, adjust an offset parameter contained in the first configuration while the cell DRX is activated, making an end of the periodic resource coincide with or precede an end of the ON duration.

### (Supplementary Note 47)

The radio terminal according to any one of Supplementary Notes 41 to 43, wherein
the first configuration contains a configuration related to periodic resource allocation for transmitting an uplink physical channel carrying uplink data, and
the second configuration contains a configuration related to a cell DRX pattern.

### (Supplementary Note 48)

The radio terminal according to Supplementary Note 47, wherein the means for performing is adapted to, if a periodicity of the periodic resource allocation defined by the first configuration is smaller than a length of a cell DRX cycle defined by the second configuration, adjust the periodicity used while the cell DRX is activated so that the periodicity becomes equal to the length of the cell DRX cycle.

### (Supplementary Note 49)

The radio terminal according to any one of Supplementary Notes 41 to 43, wherein
the first configuration contains a configuration related to periodic resource allocation for transmitting a downlink physical channel carrying downlink data, and
the second configuration contains a configuration related to a cell DTX pattern.

### (Supplementary Note 50)

The radio terminal according to Supplementary Note 49, wherein the means for performing is adapted to, if a periodicity of the periodic resource allocation defined by the first configuration is smaller than a length of a cell DTX cycle defined by the second configuration, adjust the periodicity used while the cell DTX is activated so that the periodicity becomes equal to the length of the cell DTX cycle.

### (Supplementary Note 51)

The radio terminal according to any one of Supplementary Notes 41 to 43, wherein
the first configuration contains a configuration related to periodic resource allocation for transmitting an uplink reference signal, and
the second configuration contains a configuration related to a cell DRX pattern.

### (Supplementary Note 52)

The radio terminal according to Supplementary Note 51, wherein the means for performing is adapted to, if a periodicity of the periodic resource allocation defined by the first configuration is smaller than a length of a cell DRX cycle defined by the second configuration, adjust the periodicity used while the cell DRX is activated so that the periodicity becomes equal to the length of the cell DRX cycle.

### (Supplementary Note 53)

The radio terminal according to Supplementary Note 51 or 52, wherein the means for performing is adapted to, if a periodic resource defined by the first configuration are not fully overlapped by an ON duration within a cell DRX cycle defined by the second configuration, adjust an offset parameter contained in the first configuration while the cell DRX is activated, making an end of the periodic resource coincide with or precede an end of the ON duration.

### (Supplementary Note 54)

A method performed by a radio terminal comprising:
receiving a first configuration indicating periodic resource allocation for downlink reception or uplink transmission, and a second configuration related to cell discontinuous transmission (DTX) or cell discontinuous reception (DRX); and
performing the downlink reception or uplink transmission,
wherein the performing comprises:
   if the cell DTX or cell DRX based on the second configuration is deactivated, performing the downlink reception or uplink transmission according to the periodic resource allocation defined by the first configuration; and
   if the cell DTX or cell DRX based on the second configuration is activated, adjusting the periodic resource allocation based on the second configuration related to the cell DTX or cell DRX, and performing the downlink reception or uplink transmission according to the adjusted periodic resource allocation.

### (Supplementary Note 55)

A program for causing a computer to perform a method for a radio terminal, the method comprising:
receiving a first configuration indicating periodic resource allocation for downlink reception or uplink transmission, and a second configuration related to cell discontinuous transmission (DTX) or cell discontinuous reception (DRX); and
performing the downlink reception or uplink transmission,
wherein the performing comprises:
   if the cell DTX or cell DRX based on the second configuration is deactivated, performing the downlink reception or uplink transmission according to the periodic resource allocation defined by the first configuration; and
   if the cell DTX or cell DRX based on the second configuration is activated, adjusting the periodic resource allocation based on the second configuration related to the cell DTX or cell DRX, and performing the downlink reception or uplink transmission according to the adjusted periodic resource allocation.

This application is based upon and claims the benefit of priority from Japanese Patent Application No. 2023-078938, filed on May 11, 2023, the disclosure of which is incorporated herein in its entirety by reference.

### Reference Signs List

- 1: UE
- 2: RAN node
- 21: Cell
- 1503: Baseband processor
- 1504: Application processor
- 1506: Memory
- 1507: Modules
- 1604: Processor
- 1605: Memory
- 1606: Modules

## Claims

1. A radio terminal comprising:
means for receiving, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX); and
means for using the first configuration for the downlink reception or uplink transmission while the cell DTX or cell DRX based on the third configuration is deactivated, and for using the second configuration for the downlink reception or uplink transmission while the cell DTX or cell DRX based on the third configuration is activated.

2. The radio terminal according to claim 1, wherein the means for using is adapted to switch between the first configuration and the second configuration to be used for the downlink reception or the uplink transmission, depending on whether the cell DTX or cell DRX based on the third configuration is activated or deactivated.

3. The radio terminal according to claim 1 or 2, further comprising means for maintaining the second configuration in addition to the first configuration.

4. The radio terminal according to any one of claims 1 to 3, further comprising means for receiving Layer 1 or Layer 2 signaling to deactivate or activate the cell DTX or cell DRX based on the third configuration.

5. The radio terminal according to any one of claims 1 to 4, wherein the first configuration and the second configuration each define periodic opportunities or resources where the downlink reception or uplink transmission is performed.

6. The radio terminal according to any one of claims 1 to 5, further comprising means for using the first configuration for the downlink reception or uplink transmission if the first configuration is received but the second configuration is not received, regardless of whether the cell DTX or cell DRX based on the third configuration is activated or deactivated.

7. The radio terminal according to any one of claims 1 to 6, wherein
the means for receiving is adapted to receive the second configuration via a same RRC message as the third configuration,
the third configuration is indicated by a cell DTX or cell DRX configuration information element contained in a serving cell configuration information element within the RRC message, and
the second configuration is indicated by a sub-information element contained in the cell DTX or cell DRX configuration information element.

8. The radio terminal according to any one of claims 1 to 7, wherein
the third configuration includes a plurality of cell DTX or cell DRX configurations,
the second configuration includes a plurality of configurations, each associated with a respective one of the plurality of cell DTX or cell DRX configurations, and
the means for using is adapted to use one of the plurality of configurations corresponding to an activated one of the plurality of cell DTX or cell DRX configurations while the cell DTX or cell DRX is deactivated.

9. The radio terminal according to any one of claims 1 to 8, wherein
the first configuration and the second configuration each contain a configuration related to a connected mode discontinuous reception (CDRX) pattern, and
the third configuration contains a configuration related to a cell DTX pattern.

10. The radio terminal according to claim 9, wherein
the first configuration is a drx-Config information element, and
the second configuration is an additional drx-Config information element distinct from the drx-Config information element.

11. The radio terminal according to any one of claims 1 to 8, wherein
the first configuration and the second configuration each contain a configuration related to an uplink resource to be used for transmitting a Scheduling Request (SR), and
the third configuration contains a configuration related to a cell DRX pattern.

12. The radio terminal according to any one of claims 1 to 8, wherein
the first configuration and the second configuration each contain a configuration related to periodic resource allocation for transmitting an uplink physical channel carrying uplink data, and
the third configuration contains a configuration related to a cell DRX pattern.

13. The radio terminal according to any one of claims 1 to 8, wherein
the first configuration and the second configuration each contain a configuration related to periodic resource allocation for transmitting a downlink physical channel carrying downlink data, and
the third configuration contains a configuration related to a cell DTX pattern.

14. The radio terminal according to any one of claims 1 to 8, wherein
the first configuration and the second configuration each contain a configuration related to an uplink resource to be used for transmitting an uplink reference signal, and
the third configuration contains a configuration related to a cell DRX pattern.

15. The radio terminal according to any one of claims 1 to 8, wherein
the first configuration and the second configuration each contain a configuration related to an uplink resource to be used for transmitting a physical random access channel, and
the third configuration contains a configuration related to a cell DRX pattern.

16. A radio access network node comprising:
means for transmitting to a radio terminal, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX),
wherein the first configuration is used by the radio terminal while the cell DTX or cell DRX based on the third configuration is deactivated, and
wherein the second configuration is used by the radio terminal while the cell DTX or cell DRX based on the third configuration is activated.

17. The radio access network node according to claim16, wherein the first configuration and the second configuration cause the radio terminal to switch between the first configuration and the second configuration to be used for the downlink reception or the uplink transmission, depending on whether the cell DTX or cell DRX based on the third configuration is activated or deactivated.

18. The radio access network node according to claim16 or 17, wherein the second configuration is maintained by the radio terminal in addition to the first configuration.

19. The radio access network node according to any one of claims 16 to 18, further comprising means for transmitting Layer 1 or Layer 2 signaling to deactivate or activate the cell DTX or cell DRX based on the third configuration.

20. The radio access network node according to any one of claims 16 to 19, wherein the first configuration and the second configuration each define periodic opportunities or resources where the downlink reception or uplink transmission is performed.

21. The radio access network node according to any one of claims 16 to 20, wherein the first configuration causes the radio terminal to use the first configuration for the downlink reception or uplink transmission if the first configuration is received but the second configuration is not received, regardless of whether the cell DTX or cell DRX based on the third configuration is activated or deactivated.

22. The radio access network node according to any one of claims 16 to 21, wherein
the means for transmitting is adapted to transmit the second configuration via a same RRC message as the third configuration,
the third configuration is indicated by a cell DTX or cell DRX configuration information element contained in a serving cell configuration information element within the RRC message, and
the second configuration is indicated by a sub-information element contained in the cell DTX or cell DRX configuration information element.

23. The radio access network node according to any one of claims 16 to 22, wherein
the third configuration includes a plurality of cell DTX or cell DRX configurations,
the second configuration includes a plurality of configurations, each associated with a respective one of the plurality of cell DTX or cell DRX configurations, and
the plurality of configurations cause the radio terminal to use one of the plurality of configurations corresponding to an activated one of the plurality of cell DTX or cell DRX configurations while the cell DTX or cell DRX is deactivated.

24. The radio access network node according to any one of claims 16 to 23, wherein
the first configuration and the second configuration each contain a configuration related to a connected mode discontinuous reception (CDRX) pattern, and
the third configuration contains a configuration related to a cell DTX pattern.

25. The radio access network node according to claim 24, wherein
the first configuration is a drx-Config information element, and
the second configuration is an additional drx-Config information element distinct from the drx-Config information element.

26. The radio access network node according to any one of claims 16 to 25, wherein
the first configuration and the second configuration each contain a configuration related to an uplink resource to be used for transmitting a Scheduling Request (SR), and
the third configuration contains a configuration related to a cell DRX pattern.

27. The radio access network node according to any one of claims 16 to 26, wherein
the first configuration and the second configuration each contain a configuration related to periodic resource allocation for transmitting an uplink physical channel carrying uplink data, and
the third configuration contains a configuration related to a cell DRX pattern.

28. The radio access network node according to any one of claims 16 to 27, wherein
the first configuration and the second configuration each contain a configuration related to periodic resource allocation for transmitting a downlink physical channel carrying downlink data, and
the third configuration contains a configuration related to a cell DTX pattern.

29. The radio access network node according to any one of claims 16 to 28, wherein
the first configuration and the second configuration each contain a configuration related to an uplink resource to be used for transmitting an uplink reference signal, and
the third configuration contains a configuration related to a cell DRX pattern.

30. The radio access network node according to any one of claims 16 to 29, wherein
the first configuration and the second configuration each contain a configuration related to an uplink resource to be used for transmitting a physical random access channel, and
the third configuration contains a configuration related to a cell DRX pattern.

31. A method performed by a radio terminal, comprising:
receiving, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX); and
using the first configuration for the downlink reception or uplink transmission while the cell DTX or cell DRX based on the third configuration is deactivated, and for using the second configuration for the downlink reception or uplink transmission while the cell DTX or cell DRX based on the third configuration is activated.

32. A method performed by a radio access network node, comprising:
transmitting to a radio terminal, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX),
wherein the first configuration is used by the radio terminal while the cell DTX or cell DRX based on the third configuration is deactivated, and
wherein the second configuration is used by the radio terminal while the cell DTX or cell DRX based on the third configuration is activated.

33. A program for causing a computer to perform a method for a radio terminal, the method comprising:
receiving, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX); and
using the first configuration for the downlink reception or uplink transmission while the cell DTX or cell DRX based on the third configuration is deactivated, and for using the second configuration for the downlink reception or uplink transmission while the cell DTX or cell DRX based on the third configuration is activated.

34. A program for causing a computer to perform a method for a radio access network node,
the method comprising transmitting to a radio terminal, via one or more Radio Resource Control (RRC) messages, a first configuration related to downlink reception or uplink transmission, a second configuration related to the downlink reception or the uplink transmission, provided in addition to the first configuration, and a third configuration related to cell discontinuous transmission (DTX) or cell discontinuous reception (DRX),
wherein the first configuration is used by the radio terminal while the cell DTX or cell DRX based on the third configuration is deactivated, and
wherein the second configuration is used by the radio terminal while the cell DTX or cell DRX based on the third configuration is activated.

35. A radio terminal comprising:
means for receiving a first configuration related to a plurality of connected mode discontinuous reception (CDRX) parameters, and a second configuration related to cell discontinuous transmission (DTX); and
means for performing CDRX,
wherein the means for performing is adapted to:
if the cell DTX based on the second configuration is deactivated, perform CDRX according to a CDRX pattern defined by the first configuration; and
if the cell DTX based on the second configuration is activated, modify at least one of the plurality of CDRX parameters, based on the second configuration related to the cell DTX, depending on an alignment relationship between a CDRX pattern defined by the first configuration and a cell DTX pattern defined by the second configuration, and perform CDRX according to a CDRX pattern based on the modified at least one CDRX parameter.

36. The radio terminal according to claim 35, wherein the plurality of CDRX parameters include a length of a CDRX cycle, a length of an ON duration in the CDRX cycle, and a start offset of the CDRX cycle.

37. The radio terminal according to claim 36, wherein the means for performing is adapted to, if the length of the CDRX cycle defined by the first configuration is greater than a length of a cell DTX cycle defined by the second configuration, adjust the length of the CDRX cycle used while the cell DTX is activated, making the length of the CDRX cycle equal to or shorter than the length of the cell DTX cycle.

38. The radio terminal according to claim 36 or 37, wherein the means for performing is adapted to, if the ON duration within the CDRX cycle defined by the first configuration is not fully overlapped by an ON duration within a cell DTX cycle defined by the second configuration, reduce the start offset of the CDRX cycle used while the cell DTX is activated, making an end of the ON duration within the CDRX cycle coincide with or precede an end of the ON duration within the cell DTX cycle.

39. A method performed by a radio terminal, comprising:
receiving a first configuration related to a plurality of connected mode discontinuous reception (CDRX) parameters, and a second configuration related to cell discontinuous transmission (DTX); and
performing CDRX,
wherein the performing comprises:
if the cell DTX based on the second configuration is deactivated, performing CDRX according to a CDRX pattern defined by the first configuration; and
if the cell DTX based on the second configuration is activated, modifying at least one of the plurality of CDRX parameters, based on the second configuration related to the cell DTX, depending on an alignment relationship between a CDRX pattern defined by the first configuration and a cell DTX pattern defined by the second configuration, and performing CDRX according to a CDRX pattern based on the modified at least one CDRX parameter.

40. A program for causing a computer to perform a method for a radio terminal, the method comprising:
receiving a first configuration related to a plurality of connected mode discontinuous reception (CDRX) parameters, and a second configuration related to cell discontinuous transmission (DTX); and
performing CDRX,
wherein the performing comprises:
if the cell DTX based on the second configuration is deactivated, performing CDRX according to a CDRX pattern defined by the first configuration; and
if the cell DTX based on the second configuration is activated, modifying at least one of the plurality of CDRX parameters, based on the second configuration related to the cell DTX, depending on an alignment relationship between a CDRX pattern defined by the first configuration and a cell DTX pattern defined by the second configuration, and performing CDRX according to a CDRX pattern based on the modified at least one CDRX parameter.

41. A radio terminal comprising:
means for receiving a first configuration indicating periodic resource allocation for downlink reception or uplink transmission, and a second configuration related to cell discontinuous transmission (DTX) or cell discontinuous reception (DRX); and
means for performing the downlink reception or uplink transmission,
wherein the means for performing is adapted to:
if the cell DTX or cell DRX based on the second configuration is deactivated, perform the downlink reception or uplink transmission according to the periodic resource allocation defined by the first configuration; and
if the cell DTX or cell DRX based on the second configuration is activated, adjust the periodic resource allocation based on the second configuration related to the cell DTX or cell DRX, and perform the downlink reception or uplink transmission according to the adjusted periodic resource allocation.

42. The radio terminal according to claim 41, wherein the means for performing is adapted to adjust the periodic resource allocation based on the second configuration related to the cell DTX or cell DRX, if the cell DTX or cell DRX based on the second configuration is activated, and if the periodic resource allocation defined by the first configuration is not aligned with a cell DTX pattern defined by the second configuration.

43. The radio terminal according to claim 41 or 42, wherein the means for performing is adapted to adjust the periodic resource allocation used while the cell DTX or cell DRX is activated, ensuring that more periodic resources for the downlink reception or uplink transmission fall within an ON duration within a cell DTX or cell DRX cycle.

44. The radio terminal according to any one of claims 41 to 43, wherein
the first configuration contains a configuration for periodic resource allocation for Scheduling Request (SR) transmission, and
the second configuration contains a configuration related to a cell DRX pattern.

45. The radio terminal according to claim 44, wherein the means for performing is adapted to, if a periodicity of the periodic resource allocation defined by the first configuration is smaller than a length of a cell DRX cycle defined by the second configuration, adjust the periodicity used while the cell DRX is activated so that the periodicity becomes equal to the length of the cell DRX cycle.

46. The radio terminal according to claim 44 or 45, wherein the means for performing is adapted to, if a periodic resource defined by the first configuration are not fully overlapped by an ON duration within a cell DRX cycle defined by the second configuration, adjust an offset parameter contained in the first configuration while the cell DRX is activated, making an end of the periodic resource coincide with or precede an end of the ON duration.

47. The radio terminal according to any one of claims 41 to 43, wherein
the first configuration contains a configuration related to periodic resource allocation for transmitting an uplink physical channel carrying uplink data, and
the second configuration contains a configuration related to a cell DRX pattern.

48. The radio terminal according to claim 47, wherein the means for performing is adapted to, if a periodicity of the periodic resource allocation defined by the first configuration is smaller than a length of a cell DRX cycle defined by the second configuration, adjust the periodicity used while the cell DRX is activated so that the periodicity becomes equal to the length of the cell DRX cycle.

49. The radio terminal according to any one of claims 41 to 43, wherein
the first configuration contains a configuration related to periodic resource allocation for transmitting a downlink physical channel carrying downlink data, and
the second configuration contains a configuration related to a cell DTX pattern.

50. The radio terminal according to claim 49, wherein the means for performing is adapted to, if a periodicity of the periodic resource allocation defined by the first configuration is smaller than a length of a cell DTX cycle defined by the second configuration, adjust the periodicity used while the cell DTX is activated so that the periodicity becomes equal to the length of the cell DTX cycle.

51. The radio terminal according to any one of claims 41 to 43, wherein
the first configuration contains a configuration related to periodic resource allocation for transmitting an uplink reference signal, and
the second configuration contains a configuration related to a cell DRX pattern.

52. The radio terminal according to claim 51, wherein the means for performing is adapted to, if a periodicity of the periodic resource allocation defined by the first configuration is smaller than a length of a cell DRX cycle defined by the second configuration, adjust the periodicity used while the cell DRX is activated so that the periodicity becomes equal to the length of the cell DRX cycle.

53. The radio terminal according to claim 51 or 52, wherein the means for performing is adapted to, if a periodic resource defined by the first configuration are not fully overlapped by an ON duration within a cell DRX cycle defined by the second configuration, adjust an offset parameter contained in the first configuration while the cell DRX is activated, making an end of the periodic resource coincide with or precede an end of the ON duration.

54. A method performed by a radio terminal comprising:
receiving a first configuration indicating periodic resource allocation for downlink reception or uplink transmission, and a second configuration related to cell discontinuous transmission (DTX) or cell discontinuous reception (DRX); and
performing the downlink reception or uplink transmission,
wherein the performing comprises:
if the cell DTX or cell DRX based on the second configuration is deactivated, performing the downlink reception or uplink transmission according to the periodic resource allocation defined by the first configuration; and
if the cell DTX or cell DRX based on the second configuration is activated, adjusting the periodic resource allocation based on the second configuration related to the cell DTX or cell DRX, and performing the downlink reception or uplink transmission according to the adjusted periodic resource allocation.

55. A program for causing a computer to perform a method for a radio terminal, the method comprising:
receiving a first configuration indicating periodic resource allocation for downlink reception or uplink transmission, and a second configuration related to cell discontinuous transmission (DTX) or cell discontinuous reception (DRX); and
performing the downlink reception or uplink transmission,
wherein the performing comprises:
if the cell DTX or cell DRX based on the second configuration is deactivated, performing the downlink reception or uplink transmission according to the periodic resource allocation defined by the first configuration; and
if the cell DTX or cell DRX based on the second configuration is activated, adjusting the periodic resource allocation based on the second configuration related to the cell DTX or cell DRX, and performing the downlink reception or uplink transmission according to the adjusted periodic resource allocation.
